# EUROPEAN PATENT APPLICATION

(11) **EP 1 806 869 A1**
(43) Date of publication of application: **11.07.2007**
(21) Application number: 04793095.3
(22) Date of filing: 28.10.2004
(51) Int. Cl.: H04L 9/32, H04B 1/59, H04B 5/02, G06K 17/00, G06K 19/07

(54) **COMMUNICATION DEVICE, AND COMMUNICATION METHOD**

(71) Applicant: MITSUBISHI ELECTRIC CORPORATION, Chiyoda-ku Tokyo 100-8310 (JP)
(72) Inventor: HATTORI, Takashi, Mitsubishi Denki K.K., Tokyo 100-8310 (JP); YAMADA, Keiki, Mitsubishi Denki K.K., Tokyo 100-8310 (JP); KAMEMARU, Toshihisa, Mitsubishi Denki K.K., Tokyo 100-8310 (JP); NISHIKAWA, Koji, Mitsubishi Denki K.K., Tokyo 100-8310 (JP)
(74) Representative: Pfenning, Meinig & Partner GbR
(86) International application number: PCT/JP2004/015987
(87) International publication number: WO 2006/046289

(57) **Abstract**

A communication apparatus for mutual communication, when acting as an authenticator communication apparatus performing authentication, includes a transmitting section that transmits to an authenticatee communication apparatus subject to authentication challenge data to authenticate the authenticatee communication apparatus in a time slot, which is a segmented period of time in which the communication apparatus to communicate with a specific communication apparatus; and a receiving section that receives from the authenticatee communication apparatus first response data for responding to the challenge data in the same time slot as the one in which the transmitting section transmits the challenge data. An objective is to carry out authentication of a tag by a Reader/Writer (R/W) and authentication of the R/W by the tag at the same time as an anti-collision process, and to further achieve confidentiality of unique ID information that is transmitted.

## Description

### Technical Field

The present invention relates to a communication apparatus that performs an anti-collision process for avoiding the collision of transmission data and at the same time performs authentication by using a challenge and response system.

### Background Art

A single reader/writer (hereinafter referred to as "R/W") sometimes has to read data simultaneously from a large number of tags, which occurs especially with a Radio Frequency Identification (RFID) system using modulated reflection in the UHF band. In the RFID system, an area of communication is wider between a R/W of an interrogator and a tag of a responder than a contactless IC card using electromagnetic induction in the HF band. To cope with this situation, processes called "inventory" and "anti-collision" for avoiding the collision of transmission data have been considered essential. Then, a time-slot based slotted ALOHA system, which is described in a patent document 1, and a binary tree system, which is described in a non-patent document 1, have been used to provide such processes. To the slotted ALOHA system, a similar system has also been used in a wired LAN or a wireless LAN to implement multi-access communication.

In the RFID system, unique ID information stored in a tag can be read from a distance. Given this fact, there is more demand for the system to deal with security and privacy issues when it is used as ID cards for individuals than the case of contactless IC cards working within a narrower range of communication. The key to the development of technology lies in how a tag implements encryption for authentication and confidentiality generally with far less resources than the case of contactless IC cards.

A similar issue also exists with a wireless RAN, etc. in which raw data of MAC addresses of unique ID information is transmitted according to the standards, which has not been a major issue to be taken into account. This could cause problems of security or privacy where the activities of individuals using wireless LAN cards may be in danger of being tracked.
Patent Document 1: Japanese Patent No. 3186989 (Fig. 3)
Non-patent Document 1: "Draft protocol specification for a 900 MHz Class 0 Radio Frequency Identification Tag", [online], Auto-ID Center, 2003/02/23, [search conducted on August 20, 2004], the Internet <URL:http://www.epcglobalinc.org/standards technology/Secure/v1.0/UHF-class0.pd f>

### Disclosure of the Invention

### Problems to be Solved by the Invention

To deal with such security and privacy issues, a conventional RFID system uses, for example, random numbers for ID information in communication trying to implement the acquisition of tag's ID information by a R/W without letting third parties know the tag's ID information (see page 43, Non-patent Document 1).

The ID information by random numbers (hereinafter also referred to as "random-number based ID information"), however, is not proper ID information unique to each tag (hereinafter also referred to as "unique ID information"). This may cause a collision between the random-number based ID information of one tag and the random-number based ID information of another. In addition to this, after an anti-collision process to avoid the collision of transmission data, the random-number based ID information is transmitted first to specify a particular tag, and then the unique ID information of the specified tag is to be received. This results in duplication of communication process. And, in fact, no essential solution may be given to the problem without confidentiality of the unique ID information of the tag.

Given this fact, it is aimed to have simultaneous performance of an anti-collision process and an authentication process between a R/W and a tag, i.e., authentication of the tag by the R/W and authentication of the R/W by the tag, with confidentiality of the unique ID information to be transmitted.

### Means to Solve the Problems

A communication apparatus for mutual communication may be described as follows. The communication apparatus, when acting as an authenticator communication apparatus that performs authentication, may include: a transmitting section that may transmit challenge data to authenticate an authenticatee communication apparatus that is subject to authentication to the authenticatee communication apparatus in a period allocated before a first time slot of time slots that are segmented periods of time in which the communication apparatus is able to use a single communication channel by time division; and a receiving section that may receive from the authenticatee communication apparatus first response data for responding to the challenge data in a time slot provided after the first time slot. The communication apparatus, when acting as the authenticatee communication apparatus that is subject to authentication, may include: a receiving section that may receive the challenge data to authenticate the authenticatee communication apparatus from the authenticator communication apparatus that performs authentication in a period allocated before the first time slot of the time slots that are segmented periods of time in which the communication apparatus is able to use a single communication channel by time division; and a transmitting section that may transmit to the authenticator communication apparatus the first response data for responding to the challenge data in a time slot provided after the first time slot.

### Effect of the Invention

This invention allows an authenticator communication apparatus and an authenticatee communication apparatus to transmit/receive two or more response data by a single transmission/reception of challenge data. This makes it possible to transmit/receive the response data in a segmented period of time used to be used for transmitting/receiving the challenge data. As a result, more response data may be transmitted/received than when challenge data and response data are always exchanged. Hence, communication may be implemented efficiently.

### Best Mode for Carrying out the Invention

### Embodiment 1.

A description is now given of a first embodiment. A single R/W and two or more tags are included in a communication system, where anti-collision process is performed by using a Slotted ALOHA system that uses time slots. In this situation, one-way authentication for authenticating a tag by the R/W is performed by challenge and response simultaneously in the same time slot used by the anti-collision process. It must be noted that the R/W of the first embodiment corresponds to an authenticator communication apparatus described in the claims of this application and the tag corresponds to an authenticatee communication apparatus described in the claims of this application.

The term "time slot" is now defined. The time slot may be a segmented period of time in winch a communication apparatus is able to use a communication channel by time-division. The time slot is not allocated to a communication apparatus in a fixed manner. A communication apparatus can communicate with other communication apparatuses in arbitrary time slots.

A term "encryption" in the first embodiment may be defined as a process of converting data by using the encryption algorithm of an arbitrary encryption system. A term "decryption" in the first embodiment may be defined as a process of converting data using the decryption algorithm of an arbitrary encryption system. The "decryption" in the first embodiment, therefore, not only includes the conversion of a ciphertext into a plaintext by a decryption algorithm, but also the conversion of a plaintext into decrypted data by a decryption algorithm. The "encryption" not only includes the conversion of a plaintext into a ciphertext by an encryption algorithm, but also the conversion of decrypted data, which is obtained by decrypting a plaintext, into the original plaintext by an encryption algorithm. The same may be applied to a second embodiment and a third embodiment.

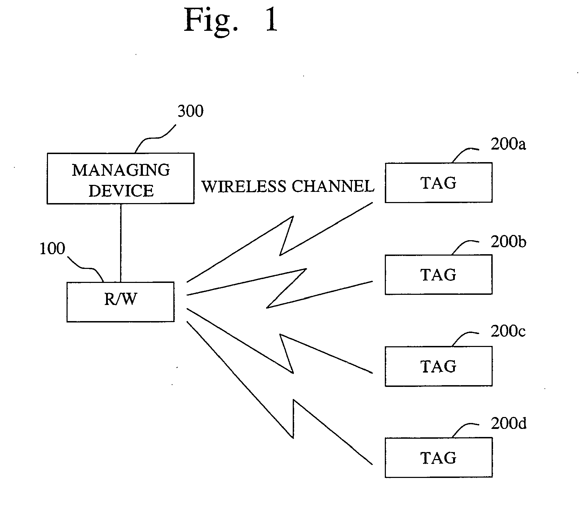

Fig. 1 is a diagram showing a configuration of a communication system according to the first embodiment. The communication system includes a R/W 100 as an authenticator communication apparatus, tags 200a, 200b, 200c, and 200d as authenticatee communication apparatuses, and a managing device 300. The R/W 100 is connected respectively to the tag 200a, the tag 200b, the tag 200c, and the tag 200d via a wireless channel. The R/W 100 is also connected to the managing device 300. The tag 200a, the tag 200b, the tag 200c, and the tag 200d may generically referred to as a tag 200. It must be noted that more than the four tags of Fig. 1 may be connected.

The R/W 100 communicates with the tag 200 in a time slot, and acquires an identifier assigned to the tag 200. In this case, the R/W 100 authenticates the tag 200 and confirms the authenticity of the tag 200. The R/W 100 then uses the acquired identifier in future communications with the tag 200.

The tag 200 communicates with the R/W 100 in a time slot, and transmits the identifier of the tag 200 to the R/W 100.

The managing device 300 manages the R/W 100 and the tag 200. The managing device 300 and the R/W 100 as separate units shown in Fig. 1 may alternatively be united into a single unit. Furthermore, the function of the managing device 300 may alternatively be implemented as a higher protocol of a communication protocol formed in the R/W 100. The same may be applied to the second embodiment and the third embodiment.

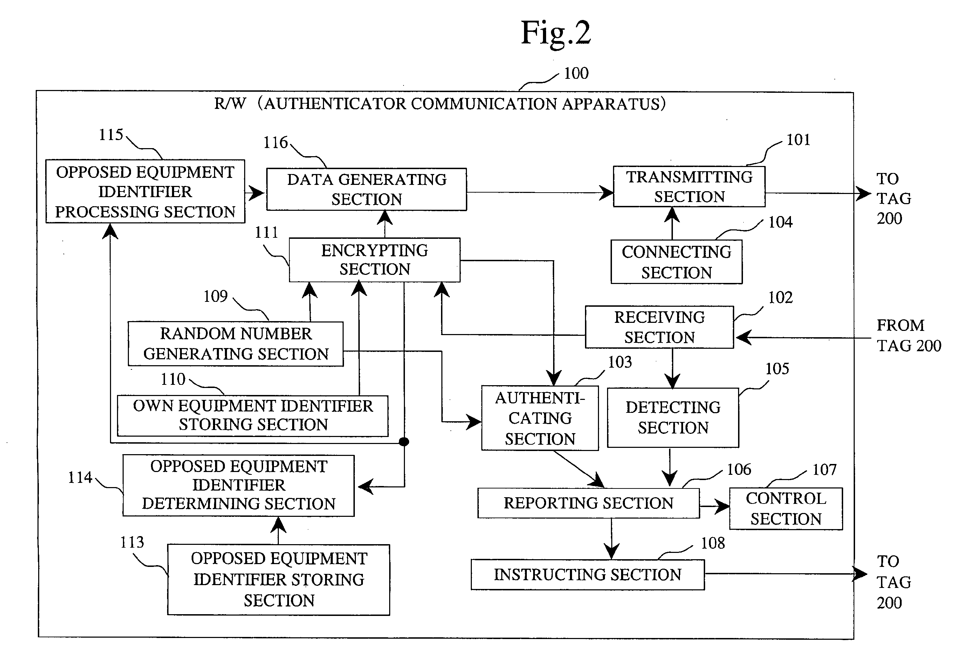

Fig. 2 is a diagram showing a configuration of the R/W 100 according to the first embodiment.
The R/W 100 may include a transmitting section 101 that transmits data to the tag 200; a receiving section 102 that receives data from the tag 200; an authenticating section 103 that performs authentication of the tag 200; a connecting section 104 that connects a communication channel with the tag 200; a detecting section 105 that detects a communication error; a reporting section 106 that makes a report on a result of authentication by the authenticating section 103 and a communication error detected by the detecting section 105; a control section 107 that controls updating of a time slot used for communication based on the report made by the reporting section 106; an instructing section 108 that instructs the tag 200 to update a time slot based on the report made by the reporting section 106; a random number generating section 109 that generates a random number; an own equipment identifier storing section 110 that stores the identifier of the R/W 100; an encrypting section 111 that encrypts data; an opposed equipment identifier storing section 113 that stores the identifier of the tag 200; an opposed equipment identifier determining section 114 that determines whether or not the identifier of the tag 200 included in response data received from the tag 200 matches the identifier of the tag 200 stored in the opposed equipment identifier storing section 113; an opposed equipment identifier processing section 115 that processes the identifier of the tag 200 received from the tag 200; and a data generating section 116 that generates challenge data to be transmitted from the transmitting section 101 to the tag 200.

The transmitting section 101 transmits to the tag 200 challenge data to authenticate the tag 200. The receiving section 102 receives from the tag 200 response data for responding to the challenge data. It must be noted that a time slot in which the transmitting section 101 transmits the challenge data to the tag 200 and a time slot in which the receiving section 102 receives the response data from the tag 200 are the same time slot.

The authenticating section 103 performs authentication using at least part of the challenge data transmitted to the tag 200 by the transmitting section 101 and the response data received from the tag 200 by the receiving section 102. It must be noted that the authenticating section 103 authenticates the tag 200 in the same time slot in which the receiving section 102 received the response data from the tag 200.

The connecting section 104 connects a communication channel with the tag 200. It must be noted that the connecting section 104 establishes the connection to the tag 200 using the same time slot in which the receiving section 102 received the response data from the tag 200.

The detecting section 105 detects a communication error, and more specifically a data collision, an error, etc. that may occur during communication, by using at least part of the response data received from the tag 200 by the receiving section 102.

The reporting section 106 reports the control section 107 and the instructing section 108, which will be described later in detail, on a result of authentication of the tag 200 by the authenticating section 103 and a communication error detected by the detecting section 105.

The control section 107 updates the time slot to use a next time slot by, for example, ending the current communication with the tag 200a, based on a report from the reporting section 106, and then starts communicating with the tag 200b.

The instructing section 108, based on the report from the reporting section 106, instructs the tag 200a, for example, to end the current communication, and then instructs the tag 200b, with which to communicate in the next time slot, to start communication.

The random number generating section 109 generates a random number of the R/W 100 to be used through challenge and response for authenticating the tag 200. The own equipment identifier storing section 110 stores an identifier assigned in advance to the R/W 100.

The encrypting section 111 encrypts data to be transmitted to the tag 200. More specifically, the encrypting section 111 encrypts the random number of the R/W 100 generated by the random number generating section 109 to generate an encrypted random number of the R/W 100 before challenge and response. The encrypting section 111 then encrypts the identifier of the R/W 100 stored in the own equipment identifier storing section 110 by using the previously generated encrypted random number of the R/W 100 to generate an encrypted identifier of the R/W 100. This may be done by a Cipher Block Chaining (CBC) mode, which is an available mode of block encryption.

The transmitting section 101 transmits the challenge data including the encrypted random number of the R/W 100 and the encrypted identifier of the R/W 100 generated by the encrypting section 111.

The encrypting section 111 may use a hash function for encrypting the random number and identifier of the R/W 100.

The opposed equipment identifier storing section 113 stores the identifier of the tags 200 to be authenticated and the identifies of the tags 200 not to be authenticated.

The opposed equipment identifier determining section 114 determines whether or not the identifier of the tag 200 to be authenticated stored in the opposed equipment identifier storing section 113 matches the identifier of the tag 200 included in response data newly received from the tag 200 by the receiving section 102. The opposed equipment identifier determining section 114 also determines whether or not the identifier of the tag 200 not to be authenticated stored in the opposed equipment identifier storing section 113 matches the identifier of the tag 200 included in response data newly received from the tag 200 by the receiving section 102.

The transmitting section 101 transmits second response data to the authenticatee communication apparatus:
when the opposed equipment identifier determining section 114 determines that the identifier of the tag 200 to be authenticated stored in the opposed equipment identifier storing section 113 matches the identifier of the tag 200 included in first response data newly received by the receiving section 102, or
when the opposed equipment identifier determining section 114 determines that the identifier of the tag 200 not to be authenticated stored in the opposed equipment identifier storing section 113 does not match the identifier of the tag 200 included in the first response data newly received by the receiving section 102.

The opposed equipment identifier processing section 115 processes the source identifier and generates a new identifier with treating the identifier of the tag 200 received by the receiving section 102 as an original source identifier. The new identifier is treated as a next source identifier. Once authentication succeeds, a communication will be made with the tag 200 using this processed identifier.

The opposed equipment identifier processing section 115 may use at least one of the hash function, encryption, and decryption to process the identifiers.

The data generating section 116 generates the challenge data including the encrypted random number and encrypted identifier of the R/W 100.

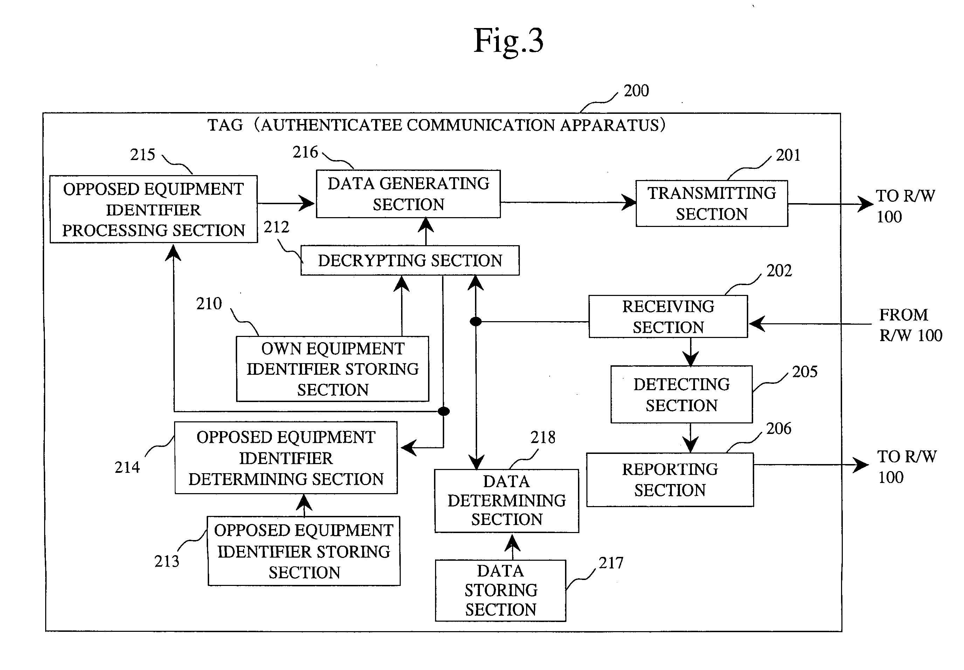

Fig. 3 is a diagram showing a configuration of the tag 200 according to the first embodiment.
The tag 200 may include a transmitting section 201 that transmits data to the R/W 100; a receiving section 202 that receives the data from the R/W 100; a detecting section 205 that detects a communication error; a reporting section 206 that reports to the R/W 100 on a communication error detected by the detecting section 205; an own equipment identifier storing section 210 that stores the identifier of the tag 200; a decrypting section 212 that decrypts data; an opposed equipment identifier storing section 213 that stores the identifier of the R/W 100; an opposed equipment identifier determining section 214 that determines whether or not the identifier of the R/W 100 included in the challenge data received from the R/W 100 matches the identifier of the R/W 100 stored in the opposed equipment identifier storing section 113; an opposed equipment identifier processing section 215 that processes the identifier of the R/W 100 received from the R/W 100; a data generating section 216 that generates the response data to be transmitted from the R/W 100 by the transmitting section 201; a data storing section 217 that stores the response data transmitted to the R/W 100 by the transmitting section 201 and the challenge data received from the R/W 100 by the receiving section 202; and a data determining section 218 that determines whether or not the challenge data or the response data stored in the data storing section 217 matches newly received challenge data at the receiving section.

The receiving section 202 receives the challenge data from the R/W 100 to authenticate the tag 200, and the transmitting section 201 transmits the response data to the R/W 100 for responding to the challenge data. It must be noted that the time slot in which the receiving section 202 receives the challenge data from the R/W 100 and the time slot in which the transmitting section 201 transmits the response data to the R/W 100 are the same time slot.

The detecting section 205 detects a communication error, and more specifically a data collision, an error, etc. that may occur during communication, using at least part of the challenge data received by the receiving section 202 from the R/W 100.

The reporting section 206 reports to the R/W 100 on a communication error detected by the detecting section 105.

The own equipment identifier storing section 210 stores the identifier of the tag 200 assigned thereto in advance.

The decrypting section 212 decrypts data to be transmitted to the R/W 100. More specifically, the decrypting section 212, before challenge and response, generates the random number of the R/W 100 obtained by decrypting the encrypted random number of the R/W 100 included in the challenge data received by the receiving section 202. The decrypting section 212 further performs decryption to generate the decrypted random number of the R/W 100. The decrypting section 212 also decrypts the identifier of the tag 200 stored in the own equipment identifier storing section 210 by using the decrypted random number of the R/W 100 previously generated to generate the decrypted identifier of the tag 200. This may be done by the CBC mode, which is an available mode for block encryption.

The transmitting section 201 transmits the response data including the decrypted random number of the R/W 100 and the decrypted identifier of the tag 200 generated by the decrypting section 212.

The decrypting section 212 may use the hash function for decrypting the encrypted random number of the R/W 100 and the identifier of the tag 200.

The opposed equipment identifier storing section 213 stores the identifiers of the R/Ws 100 to be responded and the identifies of the R/Ws 100 not to be responded.

The opposed equipment identifier determining section 214 determines whether or not the identifier of the R/W 100 to be responded stored in the opposed equipment identifier storing section 213 matches the identifier of the R/W 100 included in newly received challenge data from the R/W 100 by the receiving section 202. The opposed equipment identifier determining section 214 also determines whether or not the identifier of the R/W 100 not to be responded stored in the opposed equipment identifier storing section 213 matches the identifier of the R/W 100 included in the challenge data newly received from the R/W 100 by the receiving section 202.

The transmitting section 201 transmits the first response data to the R/W 100:
when the opposed equipment identifier determining section 214 determines that the identifier of the R/W 100 to be responded stored in the opposed equipment identifier storing section 213 matches the identifier of the R/W 100 included in the challenge data newly received by the receiving section 202, or
when the opposed equipment identifier determining section 214 determines that the identifier of the R/W 100 not to be responded stored in the opposed equipment identifier storing section 213 does not match the identifier of the R/W 100 included in the challenge data newly received by the receiving section 202.

The opposed equipment identifier processing section 215 processes the source identifier and generates a new identifier with treating the identifier of the R/W 100 received by the receiving section 202 as an original source identifier. The new identifier is treated as a next source identifier. Once authentication succeeds, a communication will be made with the R/W 100 using this processed identifier.

The opposed equipment identifier processing section 215 may use at least one of the hash function, encryption, and decryption to process the identifiers.

The data generating section 216 generates the response data including the decrypted random number of the R/W 100 and the decrypted identifier of the tag 200.

The data storing section 217 stores at least part of the response data transmitted to the R/W 100 by the transmitting section 201, e.g., the random number and identifier of the tag 200, and at least part of the challenge data received from the R/W 100 by the receiving section 202, e.g., the random number and identifier of the R/W 100.

The data determining section 218 determines whether or not one of at least part of the challenge data and at least part of the response data stored in the data storing section 217 matches at least part of the newly received challenge data from the R/W 100 by the receiving section 202.

When the data determining section 218 determines that they match, then the transmitting section 201 does not transmit new response data to the R/W 100, or transmits new response data including a communication error detected in the R/W 100.

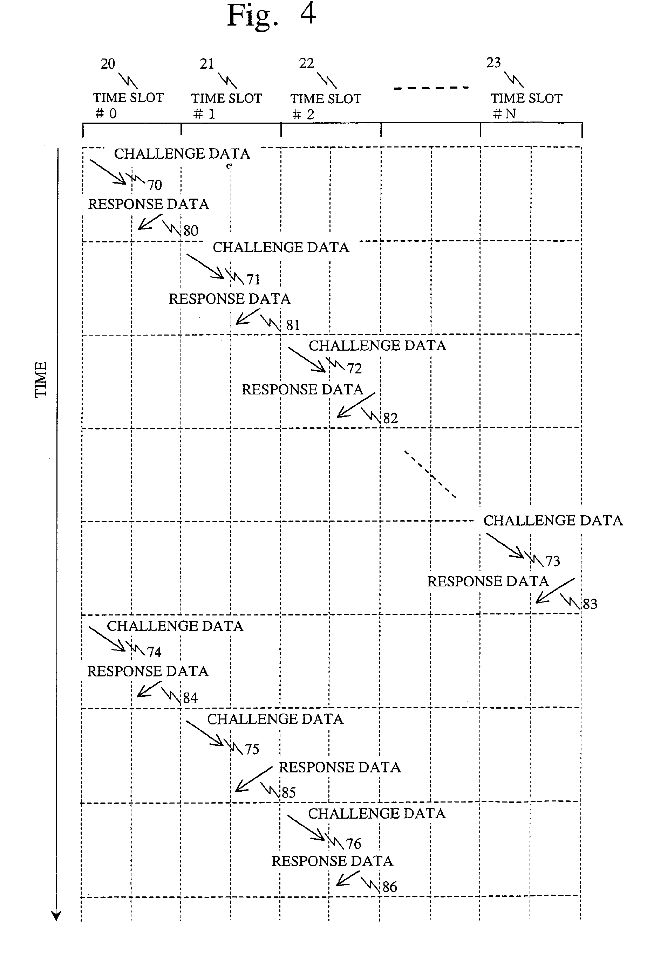

Fig. 4 is a diagram showing an example of time slots in which the challenge data and the response data are received/transmitted for authenticating the tag 200 by the R/W 100 according to the first embodiment.
In Fig. 4, the vertical axis represents the lapse of time and the horizontal axis represents time slots to be used in the lapse of time during communication. Communication is performed sequentially in one of the time slots on the horizontal axis in the lapse of time shown by the vertical axis. Referring to Fig. 4, a time slot #0, a time slot #1, a time slot #2, etc. are used sequentially in a communication. The challenge data and the response data are thus transmitted/received between the R/W 100 and the tag 200 in each time slot. Such a use of the time slots for communication between the R/W 100 and a particular tag 200 may serve to implement anti-collision to avoid the collision of transmission data.

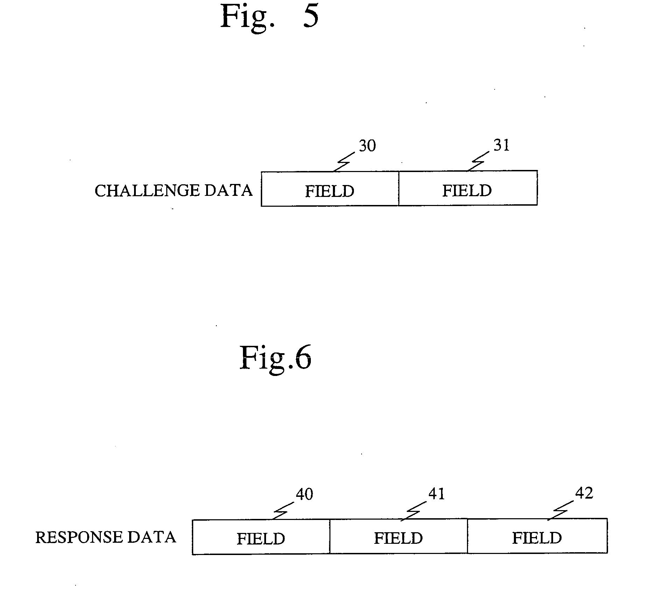

Fig. 5 is a diagram showing a configuration of the challenge data according to the first embodiment.
The challenge data is formed to include a field 30 that stores the encrypted random number obtained by encrypting a random number generated by the R/W 100, and a field 31 that stores the encrypted identifier obtained by encrypting the identifier of the R/W 100 by using the encrypted random number previously generated by the CBC mode.

Fig. 6 is a diagram showing a configuration of the response data according to the first embodiment.
The response data is formed to include a field 40 that stores the decrypted random number obtained by further decrypting the random number of the R/W 100 generated by decrypting the encrypted random number of the R/W 100 included in the challenge data, and a field 41 that stores the decrypted identifier obtained by decrypting the identifier of the tag 200 by using the decrypted random number of the R/W 100 previously generated by the CBC mode. A field 42 stores nothing.

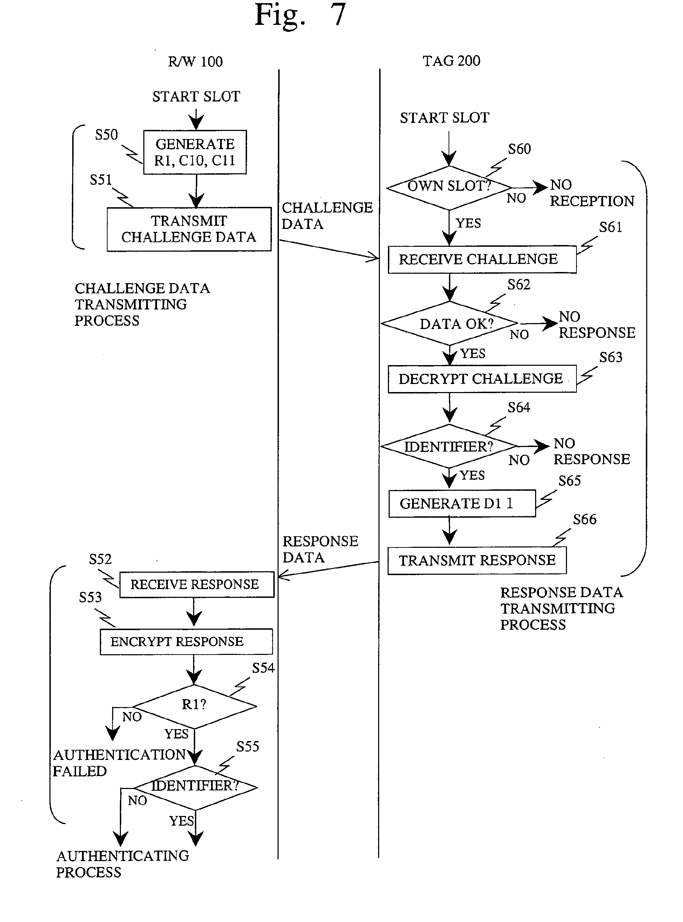

A description is now given with reference to a flowchart shown in Fig. 7 of an operation of the R/W 100 authenticating the tag 200 (one-way authentication) according to the first embodiment. This operation is performed in time slots provided for anti-collision shown in Fig. 4.

The communication apparatus may execute:
a challenge data transmitting process, in which the R/W 100 transmits to the tag 200 the challenge data to authenticate the tag 200, in a time slot, which is a segmented period of time in which the communication apparatus is able to use a single communication channel by time division;
a response data transmitting process, in which the tag 200 transmits to the R/W 100 the response data for responding to the challenge data, in a time slot after the time slot in which the R/W 100 transmits the first challenge data to the tag 200; and
an authenticating process, in which the R/W 100 authenticates the tag 200 by using at least part of the challenge data transmitted to the tag 200 and at least part of the response data received from the tag 200, in a time slot after the time slot in which the R/W 100 transmits the first challenge data to the tag 200.

It must be noted that the first challenge data includes one of a set of the first encrypted random number obtained by encrypting the random number of the R/W 100, and the first encrypted identifier obtained by encrypting the identifier of the R/W 100 by using the first encrypted random number; and a set of the first decrypted random number obtained by decrypting the random number of the R/W 100, and the first decrypted identifier obtained by decrypting the identifier of the R/W 100 by using the first decrypted random number. The first response data includes one of a set of the second decrypted random number obtained by further decrypting the random number of the R/W 100 obtained by decrypting the first encrypted random number included in the first challenge data, and the decrypted identifier obtained by decrypting the identifier of the tag 200 by using the second decrypted random number; and a set of the second encrypted random number obtained by further encrypting the random number of the R/W 100 obtained by encrypting the first decrypted random number included in the first challenge data, and the encrypted identifier obtained by encrypting the identifier of the tag 200 by using the second encrypted random number.

The operation is now described in more detail.
First, in the R/W 100, the random number generating section 109 generates a random number R1, and the encrypting section 111 encrypts the random number R1 generated by the random number generating section 109 using a common key encryption algorithm A1 with an initial value X1 and a common key K1, for example, and generates an encrypted random number C10. Subsequently, the encrypting section 111 retrieves the identifier of the R/W 100 from the own equipment identifier storing section 110, encrypts the identifier by using the encrypted random number C 10, which is previously generated by, for example, the CBC mode, which is an available mode for the common key encryption algorithm A1, and generates an encrypted identifier C11 (STEP S50).

Then, the data generating section 116 stores the encrypted random number C 10 in the field 30 of the challenge data, and stores the encrypted identifier C11 in the field 31 of the challenge data to generate the challenge data. The transmitting section 101 then transmits the challenge data generated by the data generating section 116 to the tag 200 in a time slot 20 (STEP S51). The challenge data transmitting process of the first embedment is thus described by the STEP S50 and the STEP S51.

The tag 200 determines for each time slot whether or not it is available for responding to the R/W 100 (STEP S60). When it is determined that the time slot 20 is available for the tag 200 to use for response (YES in the STEP S60), then the receiving section 202 of the tag 200 receives the challenge data from the R/W 100 in the time slot 20 (STEP S61). When it is determined that the time slot 20 is not available for the tag 200 to use for response (NO in the STEP S60), then the receiving section 202 of the tag 200 does not receive the challenge data.

The data determining section 218 of the tag 200 retrieves from the data storing section 217 stored past items of the challenge data or the history information of encrypted random numbers and encrypted identifiers as part of the past items of the challenge data, and determines whether or not they match the challenge data received by the receiving section 202 or the encrypted random number and the encrypted identifier as part thereof (STEP S62). When it is determined that they do not match (YES in the STEP S62), the decrypting section 212 decrypts the encrypted random number included in the challenge data to generate the random number R1, and further decrypts the random number R1 to generate a decrypted random number D10 (STEP S63). When it is determined that they match (NO in the STEP S62), no response data is transmitted. This may prevent spoofing of replay attacks with repeated transmissions of old challenge data used in the past.

Next, the opposed equipment identifier determining section 214 retrieves the identifier of the R/W 100 to be responded and the identifier of the R/W 100 not to be responded from the opposed equipment identifier storing section 213, and determines whether or not they match the identifier of the R/W 100 obtained by decryption (STEP S64). As a result, the decrypting section 212 then retrieves the identifier of the tag 200 from the own equipment identifier storing section 210, decrypts the identifier by using the decrypted random number D10 previously generated by the CBC mode, which is an available mode for the common key encryption algorithm A1, and generates a decrypted identifier D11 (STEP S65):
when it is determined that the identifier of the R/W 100 obtained by decryption matches the identifier of the R/W 100 to be responded (YES in the STEP S64); or
when the identifier of the R/W 100 obtained by decryption does not match the identifier of the R/W 100 not to be responded (YES in the STEP S64).
When NO in the STEP S64, then no response data is transmitted.

Next, the data generating section 216 stores the decrypted random number D10 in the field 40 of the response data, and stores the decrypted identifier D11 in the field 41 of the response data to generate the response data. The transmitting section 201 then transmits the response data generated by the data generating section 216 to the R/W 100 in the same time slot 20 in which the challenge data was also received (STEP S66). The response data transmitting process of the first embodiment is thus described by the STEP S60 through the STEP S66.

The receiving section 102 of the R/W 100 receives the response data from the tag 200 in the time slot 20 (STEP S52). The encrypting section 111 retrieves the decrypted random number D 10 from the field 40 of the response data, and encrypts it to generate the random number R1. The encrypting section 111 also retrieves the decrypted identifier D 11 from the field 41, and encrypts decrypted identifier D 11 by using the previously generated random number R1 by the CBC mode, which is an available mode for the common key encryption algorithm A1, to generate the identifier of the tag 200 (STEP S53).

Next, the authenticating section 103 determines whether or not the random number R1 generated in the STEP S53 matches the random number R1 generated previously by the random number generating section 109 in the STEP S50 (STEP S54). When it is determined that they match (YES in the STEP S54), then the opposed equipment identifier determining section 214 retrieves the identifier of the tag 200 to be authenticated and the identifier of the tag 200 not to be authenticated from the opposed equipment identifier storing section 213. The opposed equipment identifier determining section 214 then determines whether or not the identifier of the tag 200 generated in the STEP S53 matches the identifier of the tag 200 to be authenticated, and also matches the identifier of the tag 200 not to be authenticated (STEP S55). As a result, the opposed equipment identifier determining section 214 determines the authenticity of the tag 200:
when it is determined that the identifier of the tag 200 generated in S53 matches the identifier of the tag 200 to be authenticated (YES in the STEP S55), or
when it is determined that the identifier of the tag 200 generated in S53 does not match the identifier of the tag 200 not to be authenticated (YES in the STEP S55).
The opposed equipment identifier determining section 214 then confirms the success of authentication. The authentication process of the first embodiment is thus described by the STEP S52 through the STEP S55.

When it is determined that they do not match in the S54 (NO in the STEP S54), the authenticity of the tag 200 is denied. When it is determined that they do not match in the S55 (NO in the STEP S55), the authenticity of the tag 200 is denied. In both of the cases, authentication ends in failure.

In the STEP S55, when the authenticating section 103 determines the authenticity of the tag 200, and thus authentication succeeds, then the connecting section 104 performs a setup operation of connection of a communication channel with the tag 200.

The above description shows how the operation of the R/W 100 authenticating the tag 200 is performed in the same time slot 20. The same process may be applied to subsequent operations to authenticate other tags 200 using the same time slot 21, the same time slot 22, etc. by the R/W 100.

In the STEP S52, the detecting section 105 may detect an error in the response data received from the tag 200 in the time slot 20 by the receiving section 102 of the R/W 100. The detecting section 105 may otherwise detect the collision of transmission data of receiving response data from two or more tags 200 at the same time. In these cases, the R/W 100 ends the current communication performed in the time slot 20 and starts communicating with another tag 200 in the next time slot.

In the STEP S61, the detecting section 205 may detect an error in the challenge data received from the R/W 100 in the time slot 20 by the receiving section 202 of the tag 200. The detecting section 205 may otherwise detect the collision of transmission data of receiving challenge data from two or more tags 200 at the same time. In these cases, the tag 200 ends the current communication performed in the time slot 20.

If the authenticating section 103 confirms the failure of authentication of the tag 200a, or if the detecting section 105 detects a communication error, then the reporting section 106 reports to the instructing section 108 the success of authentication and the detected communication error. The instructing section 108 then instructs the tag 200, which is currently communicating in the time slot 20, to end communication, and instructs another tag 200, which is to communicate in the next time slot, to start communicating.

According to the first embodiment, the R/W 100 thus performs encryption alone, and the tag 200 thus performs decryption alone. However, the R/W 100 may perform decryption alone and the tag 200 may perform encryption alone as an alternative.

Thus, according to the first embodiment, the authentication is performed by the R/W 100 transmitting the encrypted random number obtained by encrypting the random number generated to the tag 200, the tag 200 transmitting the random number obtained by decrypting the encrypted random number received to the R/W 100, and the R/W 100 confirming whether or not the received random number matches the previously generated random number. As an alternative, authentication may be performed by the R/W 100 transmitting the generated random number to the tag 200, then the tag 200 encrypting/decrypting the received random number to generate the encrypted/decrypted random number and transmitting it to the R/W 100, and the R/W 100 confirming whether or not the random number obtained by decrypting/encrypting the received encrypted/decrypted random number matches the previously generated random number.

The hash function may be used for encryption and decryption of this case.

It is also possible to use two or more initial values Xn and common keys Kn if the R/W 100 and the tag 200 operate consistently, as an alternative. Furthermore, a combination of two or more encryption systems may be used between the R/W 100 and the tag 200. It is also possible to implement the encrypting process and the decrypting process by the hash function including shared confidential information, etc. between the R/W 100 and the tag 200. A public key encryption algorithm may also be used.

The R/W 100 and the tag 200 described in the first embodiment may form a Radio Frequency Identification (RFID) system. Furthermore, the R/W 100 and the tag 200 may be replaced by a Personal Computer (PC) and a portable information terminal as communication apparatuses, which may form a Local Area Network (LAN) and a Bluetooth system. In this case, those communication apparatuses store the unique identifiers for identifying themselves.

According to this embodiment, the same time slot may be used for transmitting/receiving the challenge data and the response data between the R/W 100 and the tag 200.

According to this embodiment, the R/W 100 may perform authentication of the tag 200 using the same time slot in which the challenge data is transmitted and the response data for responding to the challenge data is received.

According to this embodiment, when the authenticating section 103 fails to confirm the authenticity of the tag 200, or when the detecting section 105 detects a communication error, the reporting section 106 reports it to the control section 107. Then, the control section 107 instructs the tag 200, which is currently communicating, to end the current communication. The control section 107 may then start communicating with another tag 200, which is to communicate in the next time slot.

According to this embodiment, the R/W 100 may instruct, based on the report from the reporting section 106, the tag 200, which is currently communicating, to end the current communication, and instruct another tag 200, which is to communicate in the next time slot, to start communicating.

According to this embodiment, the R/W 100 may establish a connection of a communication channel with a tag in the same time slot in which the challenge data is transmitted and the response data for responding to the challenge data is received.

According to this embodiment, the data determining section 218 of the tag 200 determines whether or not at least part of the challenge data previously received and stored in the data storing section 217 and at least part of the response data previously transmitted and stored in the data storing section 217 match the challenge data newly received by the receiving section 202. This may prevent spoofing of replay attacks with repeated transmissions of old challenge data used in the past.

According to this embodiment, the challenge and response based authentication may be implemented by using the encrypted random numbers and identifiers that are obtained by the encrypting section 111 of the R/W 100 and the decrypted random numbers and identifiers that are obtained by the decrypting section 212 of the tag 200.

According to this embodiment, the encryption in the encrypting section 111 of the R/W 100 and the decryption in the decrypting section 212 of the tag 200 may use the hash function in addition to the ordinary encryption algorithm.

According to this embodiment, with the R/W 100, the authenticating section 103 may authenticate:
the tag 200 that has the identifier that matches the identifier of the tag 200 to be authenticated stored in the opposed equipment identifier storing section 113; and
the tag 200 that has the identifier that does not match the identifier of the tag 200 not to be authenticated stored in the opposed equipment identifier storing section 113.
With the tag 200, the transmitting section 201 may transmit the response data to:
the R/W 100 that has the identifier that matches the identifier of the R/W 100 to be authenticated stored in the opposed equipment identifier storing section 213; and
the R/W 100 that has the identifier that does not match the identifier of the R/W 100 not to be authenticated stored in the opposed equipment identifier storing section 213.

According to this embodiment, with the tag 200, when the detecting section 205 detects a communication error, the reporting section 106 may report it to the R/W 100.

According to this embodiment, the R/W 100 and the tag 200 may form the RFID system that performs the challenge and response based authentication using the same time slot.

According to this embodiment, the R/W 100 receives the identifier of the tag 200 for authentication, and the opposed equipment identifier processing section 115 processes the identifier for use. Thus, the R/W 100 may use this processed identifier in future communications with the tag 200.

According to this embodiment, the opposed equipment identifier processing section 115 of the R/W 100 and the opposed equipment identifier processing section 215 of the tag 200 may process data to obtain highly confidential data.

According to this embodiment, communication apparatuses that perform a mutual communication may perform one-way authentication in which one is authenticated by the other simultaneously with the anti-collision process using a time slot, by transmitting/receiving the challenge data and response data of challenge and response in the same time slot.

According to this embodiment, the challenge data and response data of challenge and response may be implemented by encrypting/decrypting random numbers and identifiers.

According to this embodiment, the challenge and response based authentication process using random numbers may be executed simultaneously with the anti-collision process by using the same time slot that is provided for the conventional anti-collision process implemented by exchanging random numbers. The anti-collision process and the authentication process may be executed thus in a single time slot, which makes the processes more efficient than when random numbers are exchanged for an anti-collision process first, and then an authentication process is performed separately by challenge and response using random numbers. Furthermore, before challenge and response is performed, identifiers are encrypted by the CBC mode, which may keep identifiers confidential.

### Embodiment 2.

A description is now given of a second embodiment in which a communication system includes a single R/W and two or more tags. The communication system employs a Slotted ALOHA system, which uses time slots to implement an anti-collision process. In this situation, a two-way authentication is performed simultaneously with an anti-collision process using the same time slot. In the two-way authentication, a R/W authenticates a tag by challenge and response, and the tag then authenticates the R/W by challenge and response. It must be noted that when the R/W 100 authenticates the tag 200, the R/W corresponds to an authenticator communication apparatus and the tag corresponds to an authenticatee communication apparatus described in the claims of this application. When the tag 200 authenticates the R/W 100, the R/W corresponds to the authenticatee communication apparatus and the tag corresponds to the authenticator communication apparatus described in the claims of this application.

The configuration of the communication system of the second embodiment is the same as that of the first embodiment.

The R/W 100 communicates with the tag 200 in a time slot, transmits an identifier assigned to the R/W 100 to the tag 200, and acquires an identifier assigned to the tag 200. In this operation, the R/W 100 authenticates the tag 200, and confirms the authenticity of the tag 200. The R/W 100 then uses the acquired identifier in future communications with the tag 200.

The tag 200 communicates with the R/W 100 in a time slot, transmits an identifier assigned to the tag 200, and acquires an identifier assigned to the R/W 100. In this operation, the tag 200 authenticates the R/W 100 and confirms the authenticity of the R/W 100. The tag 200 then uses the acquired identifier in future communications with the R/W 100.

The managing device 300 manages the R/W 100 and the tag 200.

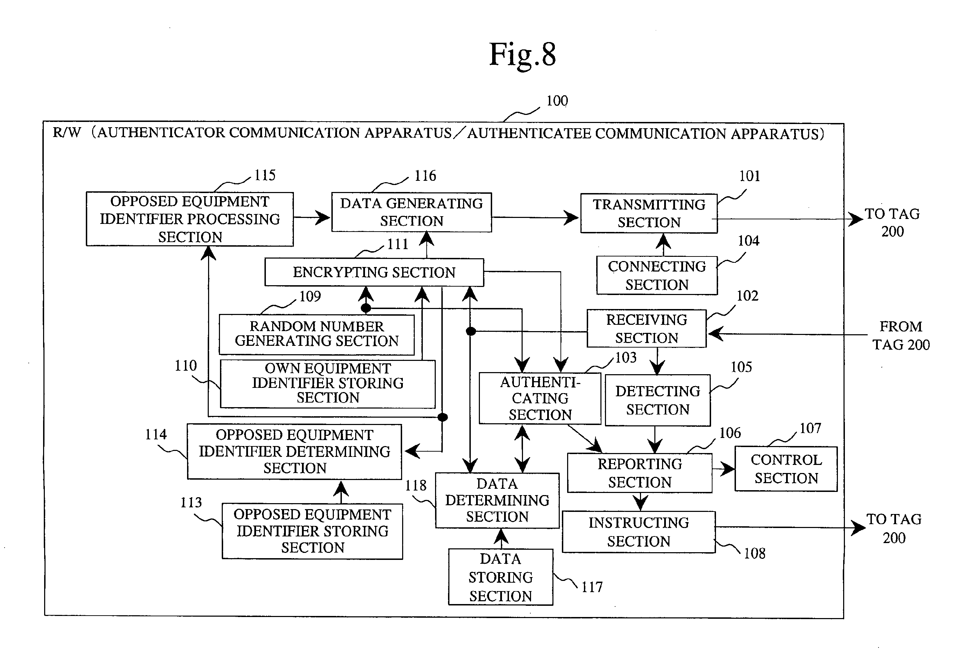

Fig. 8 is a diagram showing a configuration of the R/W 100 according to the second embodiment.
The R/W 100 of the second embodiment modifies that of the first embodiment by adding a data storing section 117 and a data determining section 118. The data storing section 117 stores challenge data (first challenge data) transmitted by the transmitting section 101 to the tag 200 and response data (first response data) received by the receiving section 102 from the tag 200. The data determining section 118 determines whether or not the first response data newly received from the tag 200 by the receiving section 102 matches one of the first challenge data and the first response data stored in the data storing section 112.

The data storing section 117 stores at least part of the first challenge data, e.g., the random number and identifier of the R/W 100, transmitted to the tag 200 by the transmitting section 101 and at least part of the first response data, e.g., the random number and identifier of the tag 200, received from the tag 200 by the receiving section 102.

The data determining section 118 determines whether or not one of at least part of the first challenge data and at least part of the first response data stored in the data storing section 117 matches at least part of the first response data newly received from the tag 200 by the receiving section 102.

When the data determining section 118 determines that they match, the transmitting section 101 does not transmit the second response data to the tag 200 or transmits the second response data including a communication error detected at the tag 200.

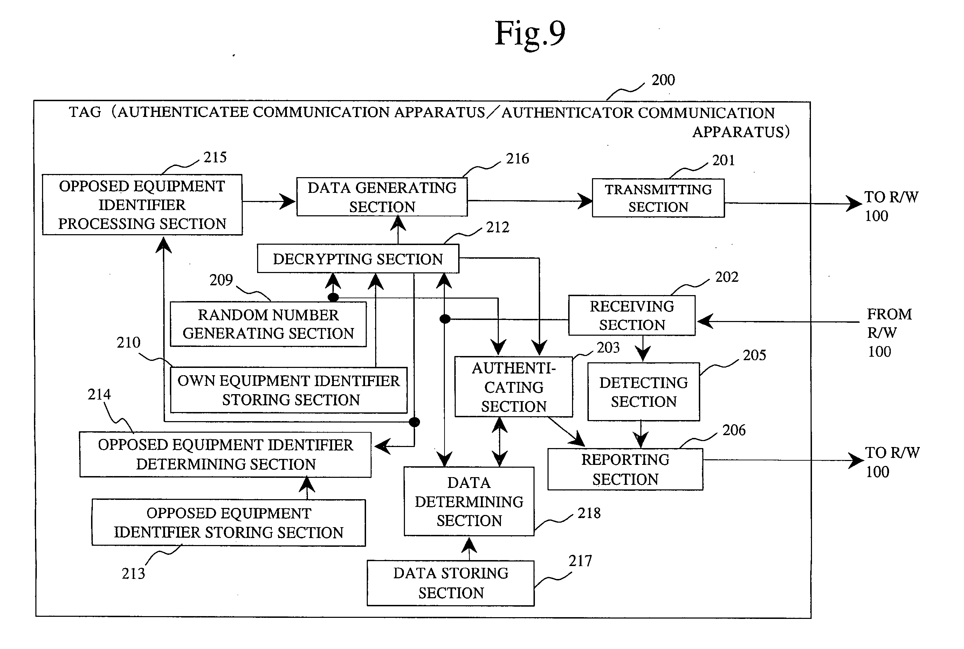

Fig. 9 is a diagram showing a configuration of the tag 200 according to the second embodiment.
The tag 200 of the second embodiment modifies that of the first embodiment by adding an authenticating section 203 that authenticates the R/W 100 and a random number generating section 209 that generates a random number of the tag 200.

The authenticating section 203 authenticates the R/W 100 based on challenge data (second challenge data) transmitted to the R/W 100 by the transmitting section 201 and response data (second response data) received from the R/W 100 by the receiving section 202. It must be noted that the authenticating section 203 authenticates the R/W 100 using the same time slot as that in which the R/W 100 transmits the first challenge data to the tag 200.

The random number generating section 209 generates a random number of the tag 200 to be used through challenge and response for authenticating the R/W 100.

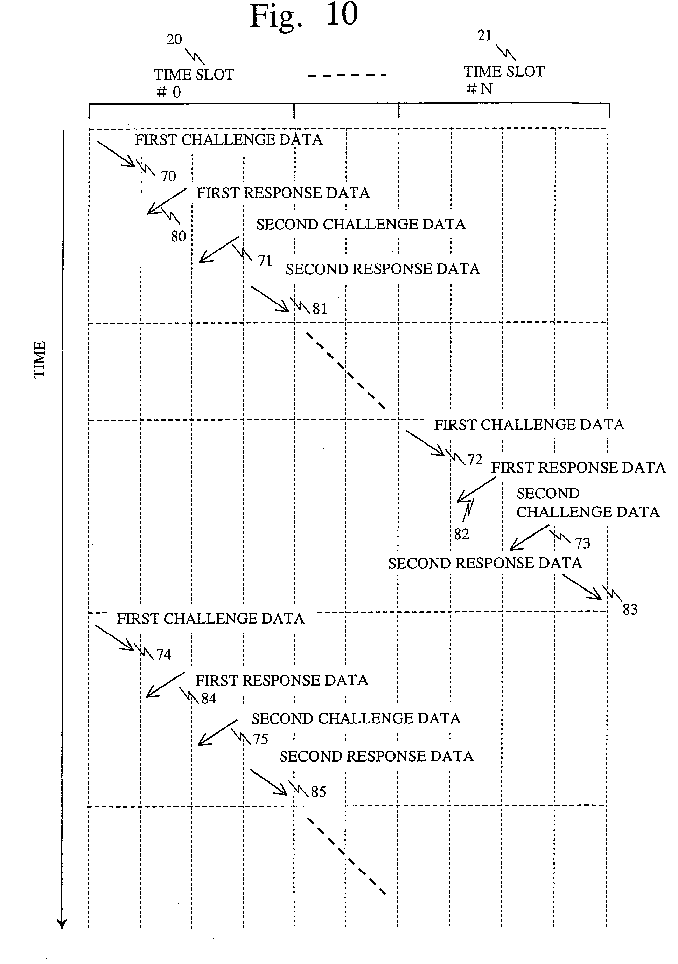

Fig. 10 is a diagram showing an example of time slots according to the second embodiment. The example of Fig. 10 is the same as that of Fig. 4 of the first embodiment except that the two-way authentication is performed in a single time slot. Intervals on the horizontal axis of Fig. 10 are twice as long as those of Fig. 4.

The first challenge data and the second challenge data of the second embodiment are the same in configuration as the challenge data of the first embodiment. The first response data and the second response data are also the same in configuration as the response data of the first embodiment.

A description is now given of an operation of the two-way authentication when the R/W 100 authenticates the tag 200 and the tag 200 authenticates the R/W 100 according to the second embodiment.
In the second embodiment, the R/W 100 of the authenticator communication apparatus authenticates the tag 200 of the authenticatee communication apparatus. After the R/W 100 confirms the authenticity of the tag 200, the tag of the authenticatee communication apparatus becomes a new authenticator communication apparatus, and the R/W 100 of the authenticator communication apparatus becomes a new authenticatee communication apparatus. The tag 200 of the new authenticator communication apparatus authenticates the R/W 100 of the new authenticatee communication apparatus.

The two-way authentication performed between the R/W 100 and the tag 200 may be implemented by executing:
the first challenge data transmitting process, in which the R/W 100 transmits to the tag 200 the first challenge data to authenticate the tag 200, in a time slot that is a segmented period of time in which the communication apparatus is able to use a single communication channel by time division;
a first response data transmitting process, in which the tag 200 transmits the first response data for responding to the first challenge data to the R/W 100 in a time slot after a time slot in which the R/W 100 transmits the first challenge data to the tag 200; a first authenticating process, in which the R/W 100 authenticates the tag 200 by using at least part of the first challenge data transmitted to the tag 200 and at least part of the first response data received from the tag 200 in a time slot after the time slot in which the R/W 100 transmits the first challenge data to the tag 200;
a second challenge data transmitting process, in which the tag 200 transmits the second challenge data to authenticate the R/W 100 to the R/W 100 in a time slot after the time slot in which the R/W 100 transmits the first challenge data to the tag 200;
a second response data transmitting process, in which the R/W 100 transmits the second response data for responding to the second challenge data to the tag 200 in a time slot after the time slot in which the R/W 100 transmits the first challenge data to the tag 200;
a second authenticating process, in which the tag 200 authenticates the R/W 100 by using at least part of the second challenge data transmitted to the R/W 100 and at least part of the second response data received from the R/W 100 in a time slot after the time slot in which the R/W 100 transmits the first challenge data to the tag 200; and
a third response data transmitting process, in which the tag 200 transmits third response data for responding to the second response data to the R/W 100 in a time slot after the time slot in which the R/W 100 transmits the first challenge data to the tag 200.

Further in the procedure described above, if the R/W 100 reports to the tag 200 the success of the authentication of the tag 200 by the R/W 100 upon the success of the authentication, and the tag 200 upon receipt of the report performs authentication of the R/W 100, then the procedure becomes as follows.
The two-way authentication performed between the R/W 100 and the tag 200 may be implemented by executing:
the first challenge data transmitting process, in which the R/W 100 transmits to the tag 200 the first challenge data to authenticate the tag 200, in a time slot that is a segmented period of time in which the communication apparatus is able to use a single communication channel by time division;
the first response data transmitting process, in which the tag 200 transmits the first response data for responding to the first challenge data to the R/W 100 in a time slot after a time slot in which the R/W 100 transmits the first challenge data to the tag 200; the first authenticating process, in which the R/W 100 authenticates the tag 200 by using at least part of the first challenge data transmitted to the tag 200 and at least part of the first response data received from the tag 200 in a time slot after the time slot in which the R/W 100 transmits the first challenge data to the tag 200;
a reporting process, in which the R/W 100 reports that the authenticity of the tag 200 is confirmed to the tag 200 in a time slot after the time slot in which the R/W 100 transmits the first challenge data to the tag 200 when the authenticity of the tag 200 is confirmed in the first authenticating process;
the second challenge data transmitting process, in which the tag 200 transmits the second challenge data to authenticate the R/W 100 to the R/W 100 in a time slot after the time slot in which the R/W 100 transmits the first challenge data to the tag 200;
the second response data transmitting process, in which the R/W 100 transmits the second response data for responding to the second challenge data to the tag 200 in a time slot after the time slot in which the R/W 100 transmits the first challenge data to the tag 200;
the second authenticating process, in which the tag 200 authenticates the R/W 100 by using at least part of the second challenge data transmitted to the R/W 100 and at least part of the second response data received from the R/W 100 in a time slot after the time slot in which the R/W 100 transmits the first challenge data to the tag 200; and
the third response data transmitting process, in which the tag 200 transmits the third response data for responding to the second response data to the R/W 100 in a time slot after the time slot in which the R/W 100 transmits the first challenge data to the tag 200.

The former procedure of the basic two-way authentication of the two procedures mentioned above may be explained as follows: first, the R/W 100 authenticates the tag 200 based on the procedure of the one-way authentication described in the first embodiment, and then the tag 200 authenticates the R/W 100 based on the same procedure of the one-way authentication. Therefore, the operation of the RlW 100 authenticating the tag 200 equals that of the R/W 100 authenticating the tag 200 (STEP S50 to STEP S56 and STEP S60 to STEP S66) discussed in the first embodiment. Likewise, the operation of the tag 200 authenticating the R/W 100 equals that of the R/W 100 authenticating the tag 200 (STEP S50 to STEP S56 and STEP S60 to STEP S66) when the roles are switched between the R/W 100 and the tag 200.

According to the second embodiment, the same time slot is used for authenticating the tag 200 by the R/W 100 and the R/W 100 by the tag. This may allow implementing the two-way authentication using the same time slot.

According to this embodiment, the R/W 100 becomes the authenticator communication apparatus to authenticate the tag 200 by challenge and response.
After the R/W 100 confirms the authenticity of the tag 200, the tag 200 then becomes the authenticator communication apparatus to authenticate the R/W 100 by challenge and response. Thus, the two-way authentication may be implemented by transmitting/receiving data four times only.

According to this embodiment, the R/W 100 reports to the tag 200 that the authenticity of the tag 200 has been confirmed through authentication. The tag 200, upon confirmation of the two-way authentication in progress without any problem, may thereby start authenticating the R/W 100.

### Embodiment 3.

A description is now given of a third embodiment for an efficient authentication, in which a communication system includes a single R/W and two or more tags. The communication system employs the time-slot based Slotted ALOHA system to implement the anti-collision process. In this situation, the challenge and response based authentication, in which a R/W authenticates a tag and the tag authenticates the R/W, is executed simultaneously with the anti-collision process. The first time slot is used for transmitting/receiving the challenge data to authenticate the tag only once, and second and following time slots are used for transmitting/receiving the response data for responding to the challenge data, and the challenge data to authenticate the R/W. It must be noted that when the R/W 100 authenticates the tag 200, the R/W corresponds to the authenticator communication apparatus, and the tag corresponds to the authenticatee communication apparatus described in the claims of this application. When the tag 200 authenticates the R/W 100, the R/W corresponding to the authenticatee communication apparatus and the tag corresponds to the authenticator communication apparatus described in the claims of this application.

The communication system of the third embodiment is the same in configuration as that of the first embodiment. The R/W 100, the tag 200, and the managing device 300 included in the communication system are the same in function as those of the second embodiment.

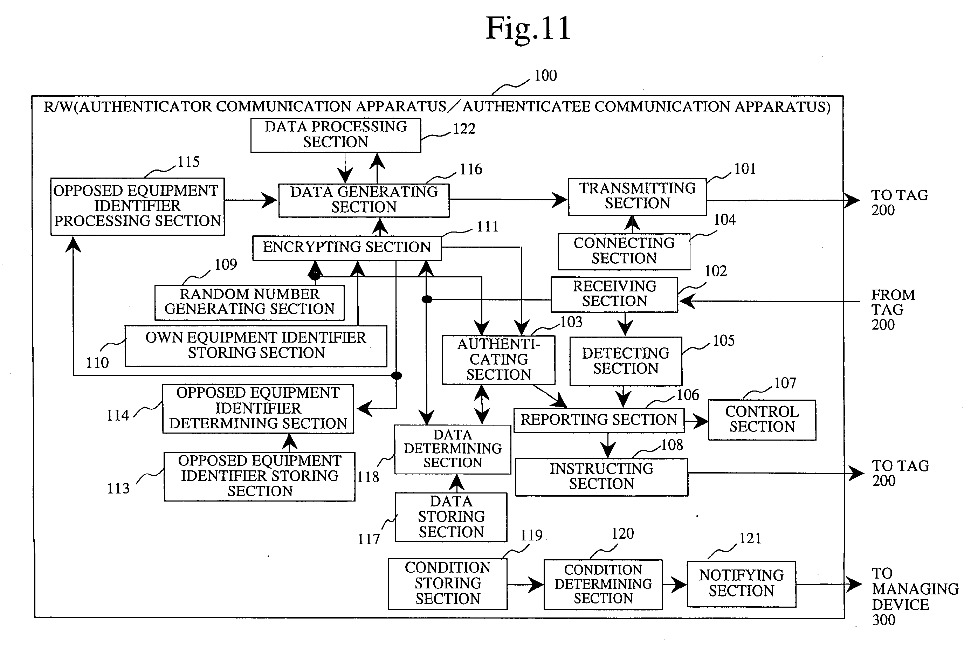

Fig. 11 is a diagram showing a configuration of the R/W 100 according to the third embodiment.
The R/W 100 of the third embodiment modifies that of the second embodiment by adding a data processing section 122 that processes the identifier of the R/W 100 included in the challenge data (the first challenge data) transmitted by the transmitting section 101.

The transmitting section 101 of the R/W 100 transmits the challenge data to the tag 200 of the communication apparatus to be authenticated in a period allocated before the first time slot of time slots that are segmented periods of time in which the communication apparatus is able to use a single communication channel by time division. The receiving section 102 of the R/W 100 receives the first response data from the tag 200 in a time slot after the first time slot.

It is also possible that the transmitting section 101 of the R/W 100 transmits the challenge data only in a period allocated before the first time slot, and the receiving section 102 of the R/W 100 receives the first response data in a time slot after the first time slot.

The transmitting section 101 of the R/W 100 transmits the challenge data to the tag 200 in the first time slot of time slots that are segmented periods of time in which the communication apparatus is able to use a single communication channel by time division. The receiving section 102 of the R/W 100 receives the first response data from the tag 200 in a time slot after the first time slot.

It is also possible that the transmitting section 101 of the R/W 100 uses the first time slot only to transmit the challenge data, and the receiving section 102 of the R/W 100 uses a time slot after the first time slot only to receive the first response data.

The data processing section 122 of the R/W 100 processes at least part of the challenge data transmitted by the transmitting section 101 and generates new data.

The data processing section 122 may use at least one of the hash function, encryption and decryption for processing the data.

The control section 107 according to the third embodiment ends the current communication with the tag 200 based on a report from the reporting section 106. The control section 107 then starts communicating with another tag 200 in the next time slot, transmits the challenge data to the authenticatee communication apparatus in the first time slot, transmits the challenge data to the authenticatee communication apparatus in a period allocated before the first time slot, or returns to the initial state of communication.

The instructing section 108 according to the third embodiment, based on the report from the reporting section 106, instructs an authenticatee communication apparatus that is the currently communicating to end the current communication; instructs an authenticatee communication apparatus to be in communication in the next time slot to start communicating; instructs the authenticatee communication apparatus in the first time slot to transmit the challenge data; instructs the authenticatee communication apparatus in a period allocated before the first time slot to transmit the challenge data; and instructs to return to the initial state of communication.

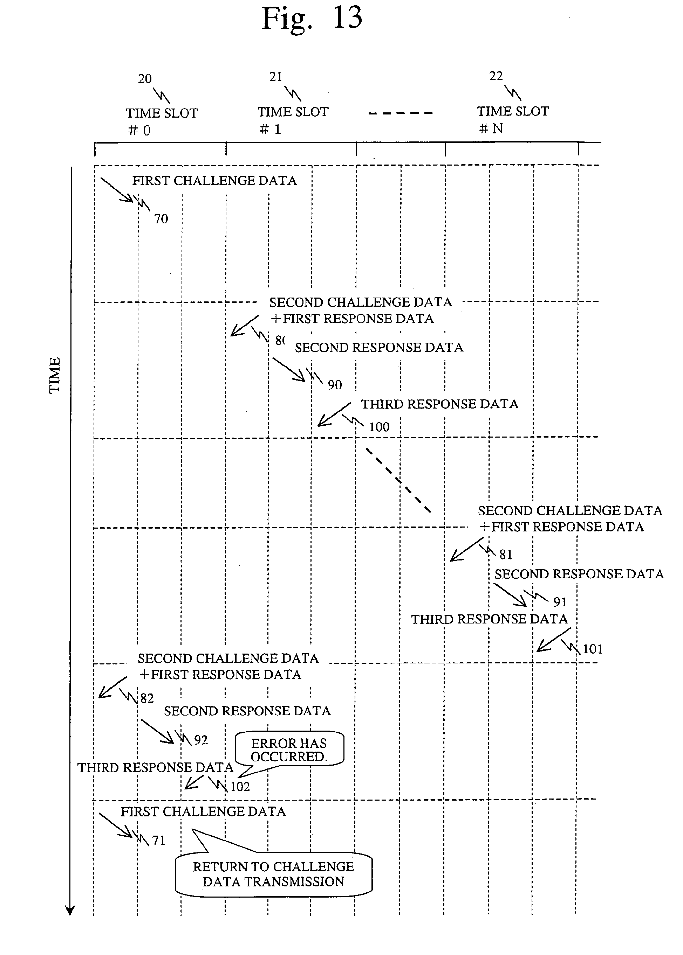

Now, the "first time slot" is a first time slot to be used during communication with a communication apparatus when a communication is started, among the time slots that are allocated by time division of a communication channel. The "period allocated before the first time slot" is an interval of time allocated before the first time slot. The "period allocated before the first time slot" is a segmented period of time provided for transmitting the challenge data before a communication is started after the communication apparatus is powered on. Referring to Fig. 13, a preliminary period allocated before the time slot 20 corresponds to the "period allocated before the first time slot". The "initial state" is the first state the communication apparatus reaches after the communication apparatus is powered on or reset. Referring to Fig. 13, the origin of the time axis before the preliminary period corresponds to the "initial state".

Elements of the R/W 100 of the third embodiment, except for the transmitting section 101, the receiving section 102, the data processing section 122, the detecting section 105, and the instructing section 108, are the same as those of the second embodiment.

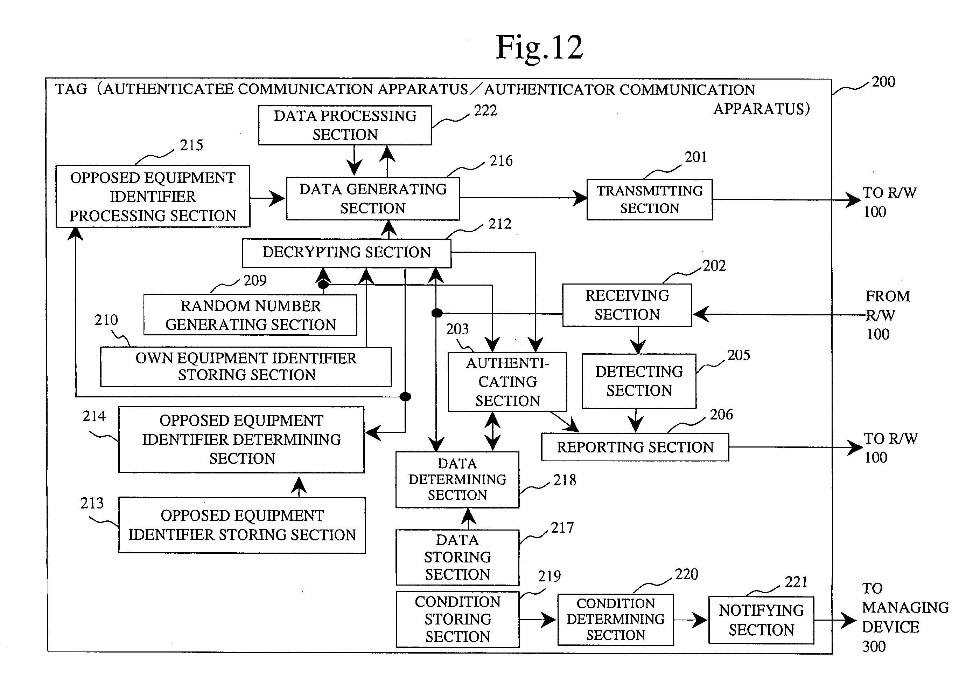

Fig. 12 is a diagram showing a configuration of the tag 200 according to the third embodiment.
The tag 200 of the third embodiment modifies that of the second embodiment by adding a data processing section 222 that processes the identifier of the R/W 100 included in the challenge data (the first challenge data) received from the R/W 100.

The receiving section 202 of the tag 200 receives the challenge data from the R/W 100 in a period allocated before the first time slot, which is a segmented period of time available to use a single communication channel by time division. The transmitting section 201 of the tag 200 transmits the first response data for responding to the challenge data to the R/W 100 in a time slot after the first time slot.

It is also possible that the receiving section 202 of the tag 200 receives the challenge data only in a period allocated before the first time slot, and the transmitting section 201 of the tag 200 transmits the first response data only in a time slot after the first time slot.

The receiving section 202 of the tag 200 may receive the challenge data from the R/W 100 in the first time slot of time slots that are segmented periods of time available to use a single communication channel by time division. The transmitting section 201 of the tag 200 may transmit the first response data for responding to the challenge data to the R/W 100 in a time slot after the first time slot.

It is also possible that the receiving section 202 of the tag 200 receives the challenge data only in the first time slot, and the transmitting section 201 of the tag 200 transmits the first response data only in a time slot after the first time slot.

The processing section 222 of the tag 200 processes at least part of the challenge data received by the receiving section 202, and generates new data.

The data processing section 222 may use one of the hash function, encryption, and decryption for processing data.

Elements of the tag 200 of the third embodiment, except for the transmitting section 201, the receiving section 202, and the data processing section 222, are the same as those of the second embodiment.

Fig. 13 is a diagram showing an example of time slots according to the third embodiment.
According to the example of Fig. 13, before using the time slot 21, challenge data 70 is transmitted to the tag 200a, the tag 200b, the tag 200c, and the tag 200d only once by the R/W 100. Response data 80 of the tag 200a for responding to the challenge data 70 is transmitted to the R/W 100 from the tag 200a in the time slot 21. Response data 81 of the tag 200b for responding to the challenge data 70 is transmitted to the R/W 100 by the tag 200b in the time slot 22. Response data 82 for responding to the challenge data 70 is transmitted to the R/W 100 from the tag 200c in the time slot 20.

The configuration of the first challenge data of the third embodiment is the same as that of the first embodiment.

The field 40 of the first response data of the third embodiment stores the decrypted random number obtained by decrypting the random number of the tag 200, the field 41 stores the decrypted random number of the R/W 100 obtained by further decrypting the encrypted random number of the R/W 100 retrieved from the challenge data received. The field 42 stores the decrypted identifier obtained by decrypting the identifier of the tag 200.

The field 40 of the second response data of the third embodiment stores the encrypted random number obtained by further encrypting one that is obtained by encrypting the decrypted random number of the tag 200 retrieved from the first response data.

The field 40 of the third response data of the second embodiment stores a decrypted identifier obtained by decrypting the identifier of the tag 200.

A description is now given of an operation of the two-way authentication performed between the R/W 100 and the tag 200 according to the third embodiment.
In the third embodiment, when the R/W 100 authenticates the tag 200, the tag 200 transmits to the R/W 100 the first response data for responding to the first challenge data together with the second challenge data for authenticating the R/W 100. The R/W 100 then transmits the second response data for responding to the second challenge data. This may reduce transmission/reception times by one time from those discussed in the second embodiment to implement the two-way authentication.

The two-way authentication performed between the R/W 100 and the tag 200 may be implemented by executing:
the first challenge data transmitting process, in which the R/W 100 transmits to the tag 200 the first challenge data to authenticate the tag 200, in a time slot that is a segmented period of time in which the communication apparatus is able to use a single communication channel by time division;
the first response data transmitting process, in which the tag 200 transmits to the R/W 100 the first response data for responding to the first challenge data and the second challenge data to authenticate the R/W 100, in a time slot after the time slot in which the R/W 100 transmits the first challenge data to the tag 200;
the first authenticating process, in which the R/W 100 authenticates the tag 200 by using at least part of the first challenge data transmitted to the tag 200 and at least part
of the first response data received from the tag 200, in a time slot after the time slot used by the R/W 100 transmitting the first challenge data to the tag 200;
the second response data transmitting process, in which the R/W 100 transmits the second response data for responding to the second challenge data to the tag 200, in a time slot after the time slot used by the R/W 100 transmitting the first challenge data to the tag 200;
the second authenticating process, in which the tag 200 authenticates the R/W 100 by using at least part of the second challenge data transmitted to the R/W 100 and at least part of the second response data received from the R/W 100, in a time slot after the time slot in which the R/W 100 transmits the first challenge data to the tag 200; and
the third response data transmitting process, in which the tag 200 transmits the third response data for responding to the second response data to the R/W 100, in a time slot after the time slot in which the R/W 100 transmits the first challenge data to the tag 200.

Further in the procedure described above, if the R/W 100 reports to the tag 200 the success of the authentication of the tag 200 by the R/W 100 upon the success of the authentication, and the tag 200 upon receipt of the report performs authentication of the R/W 100, then the operation becomes as follows.
The two-way authentication performed between the R/W 100 and the tag 200 may be implemented by executing:
the first challenge data transmitting process, in which the R/W 100 transmits to the tag 200 the first challenge data to authenticate the tag 200, in a time slot that is a segmented period of time in which the communication apparatus is able to use a single communication channel by time division;
the first response data transmitting process, in which the tag 200 transmits to the R/W 100 the first response data for responding to the first challenge data and the second challenge data to authenticate the R/W 100, in a time slot after the time slot in which the R/W 100 transmits the first challenge data to the tag 200;
the first authenticating process, in which the R/W 100 authenticates the tag 200 by using at least part of the first challenge data transmitted to the tag 200 and at least part of the first response data received from the tag 200, in a time slot after the time slot used by the R/W 100 transmitting the first challenge data to the tag 200;
the reporting process, in which the R/W 100 reports to the tag 200 that the authenticity of the tag 200 is confirmed, in a time slot after the time slot used by the R/W 100 transmitting the first challenge data to the tag 200, when the authenticity of the tag 200 is confirmed in the first authenticating process;
the second response data transmitting process, in which the R/W 100 transmits the second response data for responding to the second challenge data to the tag 200, in a time slot after the time slot used by the R/W 100 transmitting the first challenge data to the tag 200;
the second authenticating process, in which the tag 200 authenticates the R/W 100 by using at least part of the second challenge data transmitted to the R/W 100 and at least part of the second response data received from the R/W 100, in a time slot after the time slot in which the R/W 100 transmits the first challenge data to the tag 200; and
the third response data transmitting process, in which the tag 200 transmits the third response data for responding to the second response data to the R/W 100, in a time slot after the time slot in which the R/W 100 transmits the first challenge data to the tag 200.

It must be noted that the first challenge data includes one of a set of the first encrypted random number obtained by encrypting the random number of the R/W 100, and the first encrypted identifier obtained by encrypting the identifier of the R/W 100, by using the first encrypted random number; and a set of the first decrypted random number obtained by decrypting the random number of the R/W 100, and the first decrypted identifier obtained by decrypting the identifier of the R/W 100, by using the first decrypted random number. The first response data includes one of a set of the second decrypted random number obtained by decrypting the random number of the tag 200, and the third decrypted random number obtained by further decrypting the random number of the R/W 100 obtained by decrypting the first encrypted random number included in the first challenge data, by using the second decrypted random number; and a set of the second encrypted random number obtained by encrypting the random number of the tag 200, and the third encrypted random number obtained by further encrypting the random number of the R/W 100 obtained by encrypting the first decrypted random number included in the first challenge data, by using the second encrypted random number. The second response data includes one of a set of the random number of the tag 200 obtained by decrypting the second encrypted random number included in the first response data, and a fourth decrypted random number obtained by further decrypting the random number of the tag 200; and a set of the random number of the tag 200 obtained by encrypting the second decrypted random number included in the first response data, and the fourth encrypted random number obtained by further encrypting the random number of the tag 200. The third response data includes one of the second encrypted identifier obtained by encrypting the identifier of the tag 200 by using the first encrypted random number, and the second decrypted identifier obtained by decrypting the identifier of the tag 200.by using the first decrypted random number.

The R/W 100 transmits the encrypted random number obtained by encrypting the generated random number and the decrypted random number obtained by decrypting the generated random number to the tag 200. The tag 200 transmits to the R/W 100 the random number obtained by decrypting the received encrypted random number or the random number obtained by encrypting the received decrypted random number. The R/W 100 then performs authentication upon confirmation of whether or not the received random number matches a previously generated random number. Alternatively, however, the authentication may be implemented as follows: the R/W 100 may transmit a generated random number to the tag 200, and the tag 200 may encrypt the received random number to generate the encrypted random number and transmit the generated encrypted random number to R/W 100, or decrypt the received random number to generate the decrypted random number and transmit the decrypted random number to the R/W 100; and the R/W 100 may confirm whether or not one of the random number obtained by decrypting the received encrypted random number, and the random number obtained by encrypting the received decrypted random number matches a previously generated random number. In this case, the hash function may be used for encryption and decryption.

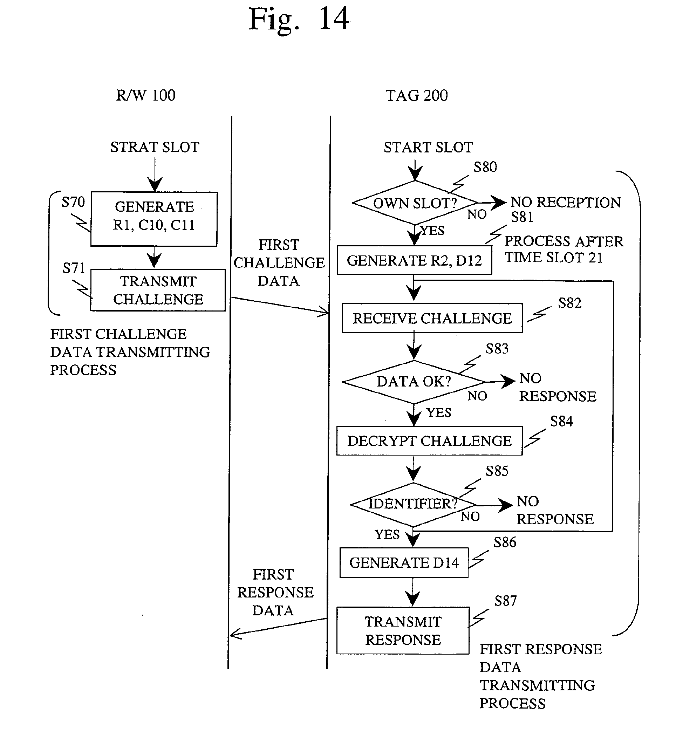

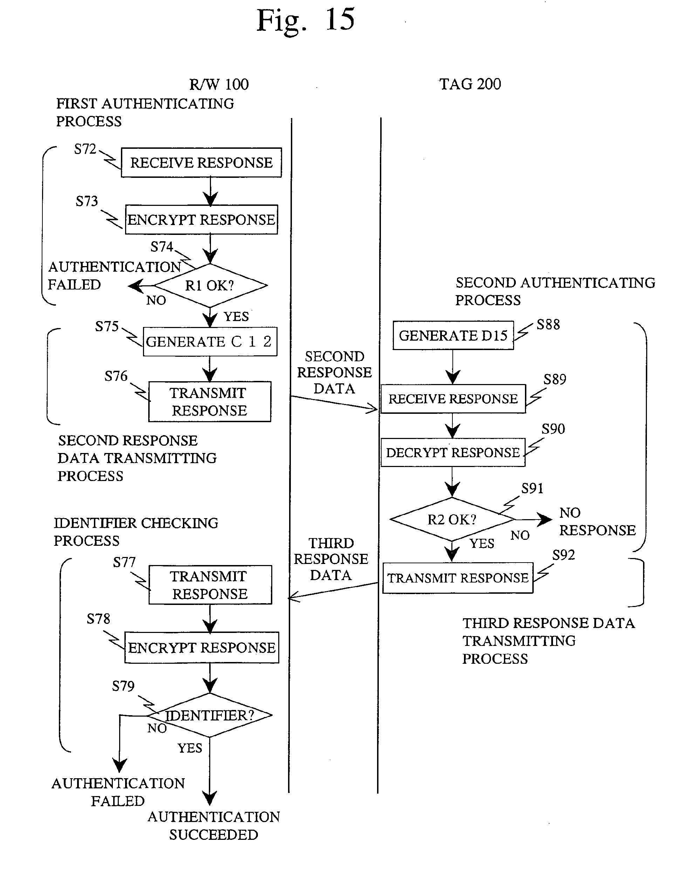

A description is now given, with reference to flowcharts of Figs. 14 and 15, of an operation performed by the R/W 100 authenticating the tag 200 and the tag 200 authenticating the R/W 100 in detail according to the third embodiment. Fig. 14 shows the first half of the operation and Fig. 15 shows the last half According to the third embodiment, the R/W 100 authenticates the tag 200 first, and the tag 200 then authenticates the R/W 100. It must be noted that transmission/reception times between the R/W 100 and the tag 200 may be reduced by one time by the tag 200 transmitting the second challenge data at the same time with the first response data for responding to the first challenge data to the R/W 100.

First, in the R/W 100, the random number generating section 109 generates the random number R1, and the encrypting section 111 encrypts the random number R1 generated by the random number generating section 109 by using the common key encryption algorithm A1 with the initial value X1 and the common key K1, for example, to generate the encrypted random number C10. Subsequently, the encrypting section 111 retrieves the identifier of the R/W 100 from the own equipment identifier storing section 110, and encrypts the identifier by using the previously generated encrypted random number C10 by the CBC mode, which is an available mode for the common key encryption algorithm A1, for example, to generate the encrypted identifier C11 (STEP S70).

Next, the data generating section 116 stores the encrypted random number C10 in the field 30 of the challenge data and the encrypted identifier C11 in the field 31 of the challenge data to generate the first challenge data. The transmitting section 101 then transmits the first challenge data generated by the data generating section 116 to the tag 200 in the first time slot 20 (STEP S71). The first challenge data transmitting process of the third embodiment is thus described by the STEP S70 and the STEP S71.

The tag 200 determines for each time slot whether or not it is available for responding to the R/W 100 (STEP S80). When the tag 200 determines that the time slot 20 is available for response (YES in the STEP S80), then the random number generating section 209 of the tag 200 generates the random number R2, and the decrypting section 212 decrypts the random number R2 generated by the random number generating section 209, by using the common key encryption algorithm A1 with the same initial value X1 and the same common key K1 as those of the R/W 100, to obtain the decrypted random number D12 of the tag 200 (STEP S81).

Then, the receiving section 202 receives the first challenge data from the R/W 100 in the time slot 20 (STEP S82). When the tag 200 determines that the time slot 20 is not available for response in the STEP S80 (NO in the STEP S80), then the receiving section 202 does not receive the first challenge data.

Next, the data determining section 218 of the tag 200 retrieves from the data storing section 217 first challenge data of the past stored therein or an encrypted random number and an encrypted identifier as part of the first challenge data, and first response data of the past stored therein or an encrypted random number and an encrypted identifier as part of the first response data. The data determining section 218 then determines whether or not they match the first challenge data received by the receiving section 202 or the encrypted random number and encrypted identifier as part of the first challenge data (STEP S83). When the data determining section 218 determines that they do not match (YES in the STEP S83), then the decrypting section 212 decrypts the encrypted random number C10 included in the challenge data to generate the random number R1 of the R/W 100, and further decrypts the random number R1 to obtain a decrypted random number D13 of the R/W 100. The decrypting section 212 also decrypts the first challenge data or the encrypted random number and encrypted identifier as part of the first challenge data, and the encrypted identifier C 11 included in the challenge data, by using the previously generated decrypted random number D13 by the CBC mode, which is an available mode for the common key encryption algorithm A1, to obtain the identifier of the R/W 100 (STEP S84). When the data determining section 218 determines that they match in the STEP S83 (NO in the STEP S83), then no response data is transmitted.

Next, the opposed equipment identifier determining section 214 retrieves from the opposed equipment identifier storing section 213 the identifiers of the R/W 100 to be responded and of the R/W 100 not to be responded, and determines whether or not they match the identifier of the R/W 100 obtained by decryption (STEP S85). When it is determined that the identifier of the R/W 100 to be responded does not match the identifier of the R/W 100 obtained by decryption (YES in the STEP S85), or when it is determined that the identifier of the R/W 100 not to be responded matches the identifier of the R/W 100 obtained by decryption (YES in the STEP S85), the decrypting section 212 retrieves the identifier of the tag 200 from the own equipment identifier storing section 210, and decrypts the identifier by using the previously generated identifier of the R/W 100 by the CBC mode, which is an available mode for the common key encryption algorithm A1, to obtain a decrypted identifier D14 (STEP S86). When it is determined in the STEP S85 that the identifier of the R/W 100 to be responded does not match the identifier of the R/W 100 obtained by decryption (NO in the STEP S85) or when it is determined that the identifier of the R/W 100 not to be responded matches the identifier of the R/W 100 obtained by decryption (NO in the STEP S85), then no response data is transmitted.

Next, the data generating section 216 stores the decrypted random number D12 of the tag 200 in the field 40 of the first response data, the decrypted random number D13 of the R/W 100 in the field 41 of the first response data, and the decrypted identifier D 14 of the tag 200 in the field 42 of the first response data, thus generating the first response data.

The transmitting section 201 transmits the first response data generated by the data generating section 216 to the R/W 100 in a time slot after the time slot 20 in which the first challenge data is received (STEP S87). The first response data includes challenge data to be used for authenticating the R/W 100 by the tag 200. The first response data transmitting process of the third embodiment is thus described by the STEP S80 through the STEP S87.

With the receiving section 102 of the R/W 100, upon receipt of the first response data from he tag 200 (STEP S72), the encrypting section 111 retrieves the decrypted identifier D14 from the field 42 of the first response data, encrypts the identifier, and generates the identifier of the tag 200 (STEP S73). The encrypting section 111 then retrieves the decrypted random number D13 stored in the field 41 of the received first response data, and encrypts the decrypted random number D13 by using the identifier of the tag 200 by the CBC mode, thus generating the random number of the R/W 100. The authenticating section 103 determines whether or not the random number of the R/W 100 generated by the encrypting section 111 matches the random number R1 generated by the random number generating section 109 in the STEP S70 (STEP S74). When it is determined that they match (YES in the STEP S74), the authenticating section 103 determines the authenticity of the tag 200, which results in the success of authentication. The first authenticating process of the third embodiment is thus described by the STEP S72 through the STEP S74.

When it is determined in the STEP S74 that they do not match (NO in the STEP S74), then the authenticating section 103 denies the authenticity of the tag 200, which results in failure of authentication.

Next, the encrypting section 111 retrieves a decrypted random number E10 of the tag 200 from the field 40 of the first response data, encrypts the decrypted random number E10 to obtain the random number R2, by using the previously generated random number of the R/W 100 by the CBC mode, and further encrypts the random number R2 to obtain an encrypted random number C12 (STEP S75). The data generating section 116 stores the encrypted random number C12 in the field 40 of the second response data to generate the second response data. The transmitting section 101 then transmits the second response data generated by the data generating section 116 to the tag 200 in a time slot after the time slot 20 (STEP S76). The second response data transmitting process of the third embodiment is thus described by the STEP S75 and the STEP S76.

With the tag 200, the decrypting section 212 retrieves the identifier of the tag 200 from the own equipment identifier storing section 210, and encrypts the identifier to obtain a D15 (STEP S88). The receiving section 202 then receives the second response data from the R/W 100 (STEP S89). The decrypting section 212 decrypts the encrypted random number C12 included in the second response data to obtain the random number R2 (STEP S90). The authenticating section 203 determines whether or not the random number R2 obtained by decryption matches the random number R2 generated by the random number generating section 209 in the STEP S81 (STEP S91). When it is determined that they match (YES in the STEP S91), the data generating section 216 stores the decrypted identifier D15 in the field 40 of the third response data, thereby generating the third response data. The transmitting section 201 then transmits the third response data generated by the data generating section 216 to the R/W 100 in a time slot after the time slot 20 (STEP S92). The second authenticating process of the third embodiment is thus described by the STEP S88 through the STEP S91. The third response data transmitting process of the third embodiment is thus described by the STEP S92.

The receiving section 102 of the R/W 100 receives the third response data from the tag 200 (STEP S77). The encrypting section 111 retrieves the decrypted identifier D15 from the field 40 of the third response data, and encrypts the decrypted identifier D15, hereby generating the identifier of the tag 200 (STEP S78). Next, the opposed equipment identifier determining section 114 retrieves from the opposed equipment identifier storing section 113 the identifier of the tag 200 to be authenticated and the identifier of the tags 200 not to be authenticated, and determines whether or not they match the identifier of the tag 200 obtained by encryption (STEP S79). When it is determined that the identifier of the tag 200 to be authenticated matches the identifier of the tag 200 obtained by encryption (YES in the STEP S79), or when it is determined that the identifier of the tag 200 not to be authenticated does not match the identifier of the tag 200 obtained by encryption (YES in the STEP S79), the authentication of the R/W 100 by the tag 200 succeeds. Thus, the two-way authentication between the R/W 100 and the tag 200 finally succeeds. When NO in the STEP S79, the authentication of the R/W 100 by the tag 200 fails. An identifier confirming process of the third embodiment is thus described by the STEP S77 through the STEP S79.

When the two-way authentication finally succeeds, the connecting section 104 establishes a communication channel with the tag 200.

The two-way authentication performed between the R/W 100 and the tag 200a is thus described. The same process may be applied to subsequent operations to implement the two-way authentication between the R/W 100 and other tags 200 in the time slot 21, time slot 22, etc.

In the foregoing descriptions on operation, the challenge data is transmitted in the first time slot. Alternatively, however, the challenge data may also be transmitted in a period allocated before the first time slot.

The R/W 100, which is configured to include the transmitting section 101, the receiving section 102, the authenticating section 103, the detecting section 105, the data storing section 117, and the data determining section 118, may additionally include a condition storing section 119, a condition determining section 120, and a notifying section 121. The condition storing section 119 stores a condition on the number of times the authenticating section 103 determines that the tag 200 is not the right communication apparatus, a condition on the number of times the detecting section 105 detects a communication error, and a condition on the number of times the data determining section 118 determines that they do not match. The condition determining section 120 determines whether or not one of the number of times the authenticating section 103 determines that the tag 200 is not the right communication apparatus, the number of times the detecting section 105 detects a communication error, and the number of times the data determining section 118 determines that they do not match, satisfies the conditions stored in the condition storing section 119. The notifying section 121 notifies the managing device that manages the communication apparatus of a result of determination by the condition determining section 120.

It must be noted that when the R/W 100 authenticates the tag 200 first, the encrypted random number R1 in the first challenge data transmitted from the R/W 100 to the tag 200 is decrypted twice in the tag 200 and becomes the decrypted random number, and then returned in the second response data to the R/W 100 from the tag 200. In this case, the R1 is encrypted in the R/W 100, and therefore returned back to the original state. When this value matches the R1 initially generated in the R/W 100, then the tag 200 may be authenticated as the right tag. When the tag 200 authenticates the R/W 100, the random number R2 generated by the tag 200 is decrypted and stored in the first response data. The R/W 100 receives this decrypted random number, encrypts it twice to obtain an once encrypted random number, and transmits this encrypted random number in the second response data to the tag 200. Then, the tag 200 decrypts it to obtain the original R2. When this value matches the R2 initially generated by the tag 200, then the R/W 100 may be authenticated as the right R/W.

The foregoing explanation may be simply applied to the case of the first time slot. In that case, however, the first challenge data will have the same value every time after the time slot 21. This poses a problem of security, in which one can make authentication succeed by copying the first response data from the previous time slot. To avoid such a copy attack or a replay attack, it is required to perform the processes discussed with reference to Fig. 14 and Fig. 15 in a time slot after the time slot 21 with treating data that is obtained by processing the challenge data in the same way in the R/W 100 and in the tag 200 as challenge data. In this case, the STEP S81 in Fig. 14 is followed by the STEP S86 to generate the D14. For example, the D14 may be generated as follows: the value R1 obtained in the STEP S84 is incremented by 1 each time the time slot proceeds, then decrypted in the STEP S86, and also in the STEP S74, a comparison is made with a value obtained by incrementing the R1 by each time slot. The method of processing the data is arbitrary if the R/W 100 and the tag 200 operate consistently. It is possible to use a combination of encryption, decryption, a hash function, etc. for processing the data.

According to this embodiment, the R/W 100 of the authenticator communication apparatus and the tag 200 of the authenticatee communication apparatus transmit/receive the challenge data once in the first time slot or the period of time allocated before the first time slot, and then transmit/receive the response data for responding to the challenge data in a later time slot. This makes it possible to transmit/receive the response data at the time when the challenge data used to be transmitted/received. Thus, more amount of response data may be transmitted/received than that where the challenge data and the response data are transmitted/received each time. This may streamline communication.

According to this embodiment, transmission/reception is made only once, and the challenge data is processed and the response data is generated thereafter. This may prevent a copy attack or a replay attack in which previously transmitted/received response data is copied and transmitted.

According to this embodiment, the challenge data may be processed by using the hash function, encryption, and decryption. This may enhance confidentiality of data processed and generated.

According to this embodiment, the R/W 100 performs one of returning to the first time slot for communicating with the first communication apparatus of two or more communication apparatuses for sequential communication; returning to a period allocated before the first time slot and transmitting the challenge data to two or more communication apparatuses; and returning to the initial state of the communication apparatus, when the;authenticating section 103 fails to confirm the authenticity of the tag 200, or when the detecting section 105 detected a communication error. This may allow the communication apparatus to restart the communication process.

According to this embodiment, the R/W 100 instructs the tag 200 to perform one of returning to the first time slot for communicating with the first communication apparatus of two or more communication apparatuses for sequential communication; returning to a period allocated before the first time slot and transmitting the challenge data to two or more communication apparatuses; and returning to the initial state of the communication apparatus, when the authenticating section 103 fails to confirm the authenticity of the tag 200, or when the detecting section 105 detected a communication error. This may allow the communication apparatus to restart the communication process in agreement with the tag 200.

According to this embodiment, when an authentication failure or communication error detection meets the conditions stored in the condition storing section 119 (when the number of times thereof exceeds those of the conditions), then the situation is reported to the managing device 300. This may allow measures to be taken to solve the problem of a communication error, etc.

According to this embodiment, the tag 200 transmits challenge data to authenticate the R/W 100 at the same time as it transmits the response data for responding to the challenge data received. This may allow the implementation of two-way authentication by transmitting/receiving data three times, which is one time less than the previously mentioned method of transmitting/receiving data four times.

According to this embodiment, the R/W 100 reports to the tag 200 the authenticity of the tag 200 confirmed through authentication. This may allow the tag 200 to start authenticating the R/W 100 upon confirmation that the two-way authentication is in order.

According to this embodiment, the encrypted random numbers and identifiers and the decrypted random numbers and identifiers are transmitted/received in the respective challenge data and response data. This may allow the implementation of authentication by challenge and response.

According to this embodiment, the authentication process may be implemented securely without transmitting the challenge data in each time slot. This may allow efficient authentication for multi-access and anti-collision if two-way authentication, which takes more time than one-way authentication, is performed in a time slot provided for the conventional anti-collision process where random number IDs are exchanged.

In the first embodiment, the case was discussed with one-way authentication, and the cases were discussed with two-way authentication in the second and third embodiments. Alternatively, however, two-way authentication may also be performed in the time slots of Fig. 4, and one-way authentication may also be performed in the time slots of Fig. 10 and Fig. 13.

With reference to the first embodiment to the third embodiment, time slots are used in the anti-collision process. Alternatively, however, a binary tree may also be used in the anti-collision process.
More specifically, the R/W 100 may be configured to include a transmitting section that transmits to the tag 200 the challenge data to authenticate the tag 200 together with a binary code to inquire whether or not the code matches at least part of the identifier of the tag 200, and a receiving section that receives from the tag 200 the response data for responding to the challenge data together with a response indicating that at least part of the identifier of the tag 200 matches the binary code. The tag 200 may also be configured to include a receiving section that receives from the R/W 100 the challenge data to authenticate the tag 200 together with the binary code to inquire whether or not the code matches at least part of the identifier of the tag 200, and a transmitting section that transmits to the R/W 100 the response data for responding to the challenge data together with a response indicating that at least part of the identifier of the tag 200 matches the binary code.

According to the third embodiment, in replacement of the Slotted ALOHA system based anti-collision process using time slots, a binary tree system based anti-collision process may also achieve challenge and response authentication.

With further reference to the first embodiment to the third embodiment, descriptions were given with the time slot system based anti-collision process as an example. However, the same authentication process may be achieved with the binary tree system based anti-collision process, and the same effects by the time slot system based anti-collision process may be achieved.

With further reference to the first embodiment to the third embodiment, descriptions were given with an application to the RFID system as an example. Alternatively, however, the method may also be applied to the case of confidentiality of MAC addresses in a wireless LAN system. Specifically, a MAC address may be obtained as the identifier of an opposed side in the same manner as discussed above. The encrypting section and the decrypting section may then be operated at the same intervals in the R/W 100 and the tag 200, thereby decrypting the identifiers in the same manner as processing the challenge data. This may allow updating MAC addresses with confidentiality. This is applicable not only to the wireless LAN system but also to any communication system that establishes a communication link for communication by using an ID unique to each device, such as wired LAN, Bluetooth, power line communication, USB, UWB, etc.

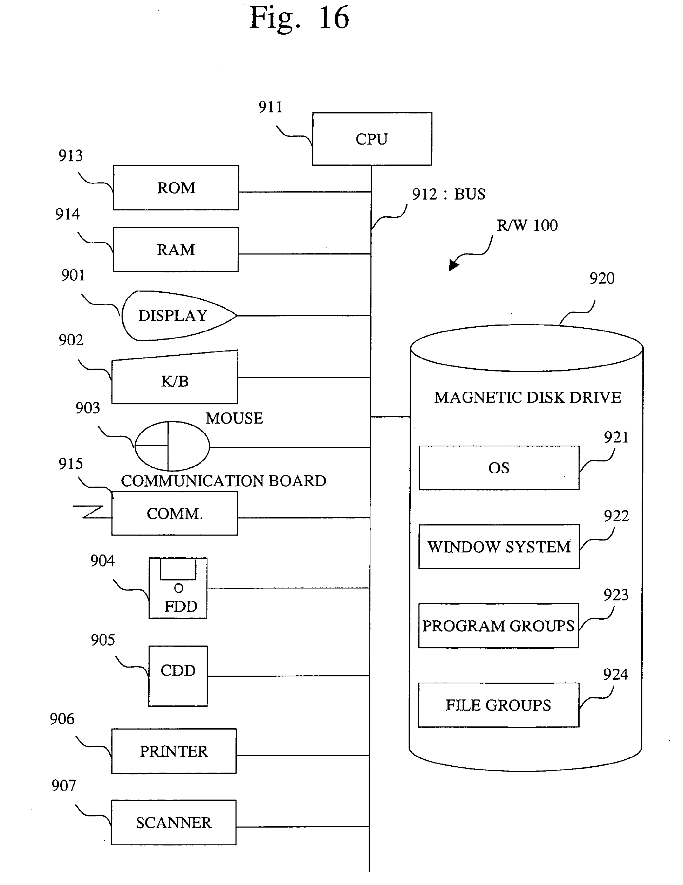

The R/W 100 described in the first embodiment to the third embodiment may be implemented by a computer. Fig. 16 is a diagram showing a hardware configuration where the R/W 100 discussed in the first embodiment to the third embodiment is implemented by a computer.
Referring to Fig. 16, the R/W 100 is equipped with a Central Processing Unit (CPU) 911 for executing programs. The CPU 911 is connected via a bus 912 to a Read Only Memory (ROM) 913, a Random Access Memory (RAM) 914, a communication board 915, a display 901, a keyboard (K/B) 902, a mouse 903, a Flexible Disk Drive (FDD) 904, a magnetic disk drive 920, a Compact Disk Drive (CDD) 905, a printer 906, and a scanner 907.

The RAM 914 is an example of a volatile memory. The ROM 913, the FDD 904, the CDD 905, the magnetic disk drive 920, an optical disk drive are examples of nonvolatile memories. These are examples of memory devices or storing sections.

It must be noted that the communication board 915 may be connected not only to a LAN but also directly to the Internet or a Wide Area Network (WAN), such as an ISDN. When the communication board 915 is connected directly to the Internet or a WAN, such as an ISDN, the R/W 100 is connected directly to the Internet or a WAN, such as an ISDN, so a web server may be eliminated.

The magnetic disk drive 920 stores an operating system (OS) 921, a window system 922, a program group 923, and a file group 924. The program group 923 is executed by the CPU 911, the OS 921, and the window system 922.

Generally, arrows appearing in the flowcharts in the description of the first embodiment and the third embodiment indicate data inputs/outputs. For the data input/output, data may be stored in other storage media, such as the magnetic disk drive 920, a Flexible Disk (FD), an optical disk, a Compact Disk (CD), a Mini Disk (MD), a Digital Versatile Disk (DVD), etc. Alternatively data may be transmitted via a signal line or other transmission media.

The sections of the first embodiment to the third embodiment may be implemented each by firmware stored in the ROM 913. Alternatively, they may be implement by software alone, hardware alone, a combination of software and hardware, or a combination of software, hardware and firmware.

Programs for executing the first embodiment to the third embodiment may be stored in a storage device by other storage media, such as the magnetic disk drive 920, a Flexible Disk (FD), an optical disk, a Compact Disk (CD), a Mini Disk (MD), and a Digital Versatile Disk (DVD), etc.

### Brief Description of the Drawings

[Fig. 1] It is a diagram showing a configuration of a communication system according to a first embodiment.
[Fig. 2] It is a diagram showing a configuration of a R/W according to the first embodiment.
[Fig. 3] It is a diagram showing a configuration of a tag according to the first embodiment.
[Fig. 4] It is a diagram showing time slots to be used for communication between a R/W and a tag according to the first embodiment.
[Fig. 5] It is a diagram showing a configuration of challenge data according to the first embodiment.
[Fig. 6] It is a diagram showing a configuration of response data according to the first embodiment.
[Fig. 7] It is a flowchart illustrating an operation of the R/W authenticating a tag according to the first embodiment.
[Fig. 8] It is a diagram showing a configuration of a R/W according to a second embodiment.
[Fig. 9] It is a diagram showing a configuration of a tag according to the second embodiment.
[Fig. 10] It is a diagram showing time slots to be used for communication between the R/W and a tag according to the second embodiment.
[Fig. 11] It is a diagram showing a configuration of a R/W according to a third embodiment.
[Fig. 12] It is a diagram showing a configuration of a tag according to the third embodiment.
[Fig. 13] It is a diagram showing time slots to be used for communication between the R/W and a tag 200 according to the third embodiment.
[Fig. 14] It is a diagram showing a flowchart illustrating the first half of an operation of the R/W authenticating a tag and the tag authenticating the R/W according to the third embodiment.
[Fig. 15] It is a diagram showing a flowchart illustrating the last half of the operation of the R/W authenticating a tag and the tag authenticating the R/W according to the third embodiment.
[Fig. 16] It is a diagram showing a configuration of the R/W of the first embodiment to the third embodiment when implemented by a computer.

### Explanation of Reference Numerals

- 100: R/W
- 101: transmitting section
- 102: receiving section
- 103: authenticating section
- 104: connecting section
- 105: detecting section
- 106: reporting section
- 107: control section
- 108: instructing section
- 109: random number generating section
- 110: own equipment identifier storing section
- 111: encrypting section
- 113: opposed equipment identifier storing section
- 114: opposed equipment identifier determining section
- 115: opposed equipment identifier processing section
- 116: data generating section
- 117: data storing section
- 118: data determining section
- 119: condition storing section
- 120: condition determining section
- 121: notifying section
- 122: data processing section
- 200: tag
- 201: transmitting section
- 202: receiving section
- 203: authenticating section
- 204: connecting section
- 205: detecting section
- 206: reporting section
- 207: control section
- 208: instructing section
- 209: random number generating section
- 210: own equipment identifier storing section
- 212: decrypting section
- 213: opposed equipment identifier storing section
- 214: opposed equipment identifier determining section
- 215: opposed equipment identifier processing section
- 216: data generating section
- 217: data storing section
- 218: data determining section
- 219: condition storing section
- 220: condition determining section
- 221: notifying section
- 222: data processing section
- 300: managing device
- 901: display
- 902: keyboard (K/B)
- 903: mouse
- 904: FDD
- 905: CDD
- 906: printer
- 907: scanner
- 911: CPU
- 912: bus
- 913: ROM
- 914: RAM
- 915: communication board
- 920: magnetic disk

## Claims

1. A communication apparatus for mutual communication,
when the communication apparatus is an authenticator communication apparatus that performs authentication,
the communication apparatus comprising:
a transmitting section that transmits challenge data to authenticate an authenticatee communication apparatus that is subject to authentication to the authenticatee communication apparatus in a period allocated before a first time slot of time slots that are segmented periods of time in which the communication apparatus is able to use a single communication channel by time division; and
a receiving section that receives from the authenticatee communication apparatus first response data for responding to the challenge data in a time slot provided after the first time slot, and
when the communication apparatus is the authenticatee communication apparatus that is subject to authentication,
the communication apparatus comprising:
a receiving section that receives the challenge data to authenticate the authenticatee communication apparatus from the authenticator communication apparatus that performs authentication in a period allocated before the first time slot of the time slots that are segmented periods of time in which the communication apparatus is able to use a single communication channel by time division; and
a transmitting section that transmits to the authenticator communication apparatus the first response data for responding to the challenge data in a time slot provided after the first time slot.

2. The communication apparatus of claim 1,
when the communication apparatus is the authenticator communication apparatus that performs authentication,
wherein the transmitting section transmits the challenge data only in the period allocated before the first time slot, and
wherein the receiving section receives the first response data only in the time slot provided after the first time slot, and
when the communication apparatus is the authenticatee communication apparatus,
wherein the receiving section receives the challenge data only in the period allocated before the first time slot, and
wherein the transmitting section transmits the first response data only in the time slot provided after the first time slot.

3. A communication apparatus for mutual communication,
when the communication apparatus is an authenticator communication apparatus that performs authentication,
the communication apparatus comprising:
a transmitting section that transmits challenge data to authenticate an authenticatee communication apparatus that is subject to authentication to the authenticatee communication apparatus in a first time slot of time slots that are segmented periods of time in which the communication apparatus is able to use a single communication channel by time division; and
a receiving section that receives first response data for responding to the challenge data from the authenticatee communication apparatus in a time slot provided after the first time slot, and
when the communication apparatus is the authenticatee communication apparatus that is subject to authentication,
the communication apparatus comprising:
a receiving section that receives the challenge data to authenticate the authenticatee communication apparatus from the authenticator communication apparatus that performs authentication in the first time slot of the time slots that are segmented periods of time in which the communication apparatus is able to use a single communication channel by time division; and
a transmitting section that transmits the first response data for responding to the challenge data to the authenticator communication apparatus in a time slot after the first time slot.

4. The communication apparatus of claim 3,
when the communication apparatus is the authenticator communication apparatus,
wherein the transmitting section transmits the challenge data only in the first time slot,
wherein the receiving section receives the first response data only in the time slot after the first time slot, and
when the communication apparatus is the authenticatee communication apparatus,
wherein the receiving section receives the challenge data only in the first time slot, and
wherein the transmitting section transmits the first response data only in the time slot after the first time slot.

5. The communication apparatus of claim 1 or 3,
when the communication apparatus is the authenticator communication apparatus,
the communication apparatus further comprising:
a data processing section that processes at least part of the challenge data transmitted by the transmitting section and generates new data, and
when the communication apparatus is the authenticatee communication apparatus,
the communication apparatus further comprising:
a data processing section that processes at least part of the challenge data received by the receiving section and generates new data.

6. The communication apparatus of claim 5, wherein the data processing section uses at least one of a hash function, encryption and decryption to process the data.

7. A communication apparatus for mutual communication,
when the communication apparatus is an authenticator communication apparatus that performs authentication,
the communication apparatus comprising:
a transmitting section that transmits challenge data to authenticate an authenticatee communication apparatus that is subject to authentication to the authenticatee communication apparatus in a time slot that is a segmented period of time in which the communication apparatus is able to use a single communication channel by time division; and
a receiving section that receives first response data for responding to the challenge data from the authenticatee communication apparatus in a same time slot as the time slot in which the transmitting section transmits the challenge data, and
when the communication apparatus is the authenticatee communication apparatus that is subject to authentication,
the communication apparatus comprising:
a receiving section that receives the challenge data to authenticate the authenticatee communication apparatus from the authenticator communication apparatus that performs authentication in a time slot that is a segmented period of time in which the communication apparatus is able to use a single communication channel by time division; and
a transmitting section that transmits the first response data for responding to the challenge data to the authenticator communication apparatus in a same time slot as the time slot in which the receiving section receives the challenge data.

8. The communication apparatus of any one of claims l, 3 and 7,
when the communication apparatus is the authenticator communication apparatus,
the communication apparatus further comprising:
an authenticating section that authenticates the authenticatee communication apparatus by using at least part of the challenge data transmitted by the transmitting section and at least part of the first response data received by the receiving section.

9. The communication apparatus of claim 8,
when the communication apparatus is the authenticator communication apparatus,
the communication apparatus further comprising:
a detecting section that detects a communication error by using at least part of the first response data received by the receiving section;
a reporting section that makes a report about a result of authentication performed by the authenticating section and a result of detection of the communication error detected by the detecting section; and
a control section that ends a current communication with the authenticatee communication apparatus based on the report from the reporting section and performs one of
starting communicating with another authenticatee communication apparatus in a next time slot;
transmitting the challenge data in a first time slot;
transmitting the challenge data in a period allocated before the first time slot; and
returning to an initial state of communication.

10. The communication apparatus of claim 9,
when the communication apparatus is the authenticator communication apparatus,
the communication apparatus further comprising:
an instructing section that instructs the authenticatee communication apparatus currently communicating to end communication based on the report from the reporting section and instructs an authenticatee communication apparatus to communicate in the next time slot to start communicating, instructs to transmit the challenge data in the first time slot, instructs to transmit the challenge data in the period allocated before the first time slot, and instructs to return to the initial state of the communication.

11. The communication apparatus of any one of claims 1, 3 and 7,
when the communication apparatus is the authenticator communication apparatus,
the communication apparatus further comprising:
a connecting section that connects a communication channel with the authenticatee communication apparatus in a same time slot as the time slot in which the receiving section receives the first response data.

12. The communication apparatus of any one of claims 1, 3 and 7,
when the communication apparatus is the authenticator communication apparatus,
the communication apparatus further comprising:
a data storing section that stores at least part of the challenge data transmitted by the transmitting section and at least part of the first response data received by the receiving section;
a data determining section that determines whether one of the at least part of the challenge data and the at least part of the first response data stored in the data storing section matches at least part of first response data newly received by the receiving section;
wherein the transmitting section performs one of not transmitting second response data and transmitting second response data for causing the authenticatee communication apparatus to detect a communication error, when the data determining section determines that they match, and
when the communication apparatus is the authenticatee communication apparatus that is subject to authentication,
the communication apparatus further comprising:
a data storing section that stores at least part of the challenge data received by the receiving section and at least part of the first response data transmitted by the transmitting section;
a data determining section that determines whether one of the at least part of the challenge data and the at least part of the first response data stored in the data storing section matches at least part of challenge data newly received by the receiving section;
wherein the transmitting section performs one of not transmitting new first response data and transmitting new first response data for causing the authenticator communication apparatus to detect a communication error, when the data determining section determines that they match.

13. The communication apparatus of any one of claims 1, 3 and 7,
when the communication apparatus is the authenticator communication apparatus,
the communication apparatus further comprising:
an authenticating section that authenticates the authenticatee communication apparatus by using at least part of the challenge data transmitted by the transmitting section and at least part of the first response data received by the receiving section;
a detecting section that detects a communication error by using at least part of the first response data received by the receiving section;
a data storing section that stores at least part of the challenge data transmitted by the transmitting section and at least part of the first response data received by the receiving section;
a data determining section that determines whether one of the at least part of the challenge data and the at least part of the first response data stored in the data storing section matches at least part of first response data newly received by the receiving section;
a condition storing section that stores conditions on:
a number of times the authenticating section determines that the authenticatee communication apparatus is not a right communication apparatus;
a number of times the detecting section detects a communication error; and
a number of times the data determining section determines that they do not match;
a condition determining section that determines whether at least one of the number of times the authenticating section determines that the authenticatee communication apparatus is not the right communication apparatus, the number of times the detecting section detects a communication error, and the number of times the data determining section determines that they do not match satisfies the conditions stored in the condition storing section; and
a notifying section that notifies a managing device that manages the communication apparatus of a result of determination by the condition determining section.

14. The communication apparatus of any one of claims 1, 3 and 7,
when the communication apparatus is the authenticator communication apparatus,
the communication apparatus further comprising:
at least one of an encrypting section that encrypts data and a decrypting section that decrypts data;
a random number generating section that generates a random number of the authenticator communication apparatus; and
an own equipment identifier storing section that stores an identifier of the authenticator communication apparatus,
wherein the encrypting section encrypts the random number of the authenticator communication apparatus generated by the random number generating section to generate an encrypted random number of the authenticator communication apparatus, and also encrypts the identifier of the authenticator communication apparatus stored in the own equipment identifier storing section by using the encrypted random number of the authenticator communication apparatus to generate an encrypted identifier of the authenticator communication apparatus,
wherein the decrypting section decrypts the random number of the authenticator communication apparatus generated by the random number generating section to generate a decrypted random number of the authenticator communication apparatus, and also decrypts the identifier of the authenticator communication apparatus stored in the own equipment identifier storing section by using the decrypted random number of the authenticator communication apparatus to generate a decrypted identifier of the authenticator communication apparatus,
wherein the transmitting section transmits the challenge data including one of a set of the encrypted random number of the authenticator communication apparatus and the encrypted identifier of the authenticator communication apparatus generated by the encrypting section, and a set of the decrypted random number of the authenticator communication apparatus and the decrypted identifier of the authenticator communication apparatus generated by the decrypting section, and
when the communication apparatus is the authenticatee communication apparatus,
the communication apparatus further comprising:
at least one of an encrypting section that encrypts data and a decrypting section that decrypts data; and
an own equipment identifier storing section that stores an identifier of the authenticatee communication apparatus,
wherein the encrypting section further encrypts the random number of the authenticator communication apparatus obtained by encrypting the decrypted random number of the authenticator communication apparatus included in the challenge data received by the receiving section to generate an encrypted random number of the authenticator communication apparatus, and also encrypts the identifier of the authenticatee communication apparatus stored in the own equipment identifier storing section by using the encrypted random number of the authenticator communication apparatus to generate an encrypted identifier of the authenticatee communication apparatus,
wherein the decrypting section further decrypts the random number of the authenticator communication apparatus obtained by decrypting the encrypted random number of the authenticator communication apparatus included in the challenge data received by the receiving section to generate a decrypted random number of the authenticator communication apparatus, and also decrypts the identifier of the authenticatee communication apparatus stored in the own equipment identifier storing section by using the decrypted random number of the authenticator communication apparatus to generate a decrypted identifier of the authenticatee communication apparatus, and
wherein the transmitting section transmits the first response data including one of a set of the encrypted random number of the authenticator communication apparatus and the encrypted identifier of the authenticatee communication apparatus generated by the encrypting section and a set of the decrypted random number of the authenticator communication apparatus and the decrypted identifier of the authenticatee communication apparatus generated by the decrypting section.

15. The communication apparatus of claim 14,
wherein the encrypting section uses a hash function to encrypt data, and
wherein the decrypting section uses the hash function to decrypt data.

16. The communication apparatus of any one of claims 1, 3 and 7,
when the communication apparatus is the authenticator communication apparatus,
the communication apparatus further comprising:
an opposed equipment identifier storing section that stores an identifier of a communication apparatus to be authenticated and an identifier of a communication apparatus not to be authenticated, and
an opposed equipment identifier determining section that determines whether an identifier stored in the opposed equipment identifier storing section matches an identifier of the authenticatee communication apparatus included in first response data newly received by the receiving section,
wherein the transmitting section transmits second response data to the authenticatee communication apparatus in one of cases:
where the opposed equipment identifier determining section determines that the identifier of the communication apparatus to be authenticated stored in the opposed equipment identifier storing section matches the identifier of the authenticatee communication apparatus included in the first response dada newly received by the receiving section, and
where the opposed equipment identifier determining section determines that the identifier of the communication apparatus not to be authenticated stored in the opposed equipment identifier storing section does not match the identifier of the authenticatee communication apparatus included in the first response data newly received by the receiving section,
when the communication apparatus is the authenticatee communication apparatus,
the communication apparatus further comprising:
an opposed equipment identifier storing section that stores an identifier of a communication apparatus to be responded and an identifier of a communication apparatus not to be responded, and
an opposed equipment identifier determining section that determines whether an identifier stored in the opposed equipment identifier storing section and an identifier of the authenticator communication apparatus included in challenge data newly received by the receiving section,
wherein the transmitting section transmits the first response data to the authenticator communication apparatus in one of cases:
where the opposed equipment identifier determining section determines that the identifier of the communication apparatus to be responded stored in the opposed equipment identifier storing section matches the identifier of the authenticator communication apparatus included in the challenge dada newly received by the receiving section, and
where the opposed equipment identifier determining section determines that the identifier of the communication apparatus not to be responded stored in the opposed equipment identifier storing section does not match the identifier of the authenticator communication apparatus included in the challenge data newly received by the receiving section.

17. The communication apparatus of any one of claims 1, 3 and 7,
when the communication apparatus is the authenticatee communication apparatus,
the communication apparatus further comprising:
a detecting section that detects a communication error by using at least part of the challenge data received by the receiving section from the authenticatee communication apparatus; and
a reporting section that makes a report about a result of detection of the communication error detected by the detecting section.

18. The communication apparatus of any one of claims 1, 3 and 7 forming one of a Radio Frequency Identification (RFID) system, a Local Area Network (LAN), and a Bluetooth system, and storing a unique identifier to identify the communication apparatus.

19. The communication apparatus of any one of claims 1, 3 and 7,
when the communication apparatus is the authenticator communication apparatus,
the communication apparatus further comprising:
an opposed equipment identifier processing section that processes a source identifier and generate a new identifier with treating an identifier of the authenticatee communication apparatus included in the first response data received by the receiving section as an original source identifier and the new identifier generated as a next source identifier, and
when the communication apparatus is the authenticatee communication apparatus,
the communication apparatus further comprising:
an opposed equipment identifier processing section that processes a source identifier and generate a new identifier with treating an identifier of the authenticator communication apparatus included in the challenge data received by the receiving section as an original source identifier and the new identifier generated as a next source identifier.

20. The communication apparatus of claim 19, wherein the opposed equipment identifier processing section uses at least one of a hash function, encryption and decryption to process the identifier.

21. A plurality of communication apparatuses for mutual communication,
when the communication apparatus is an authenticator communication apparatus that performs authentication,
the communication apparatus comprising:
a transmitting section that transmits to an authenticatee communication apparatus that is subject to authentication challenge data to authenticate the authenticatee communication apparatus together with a value to inquire whether the value matches at least part of an identifier of the authenticatee communication apparatus; and
a receiving section that receives from the authenticatee communication apparatus response data for responding to the challenge data together with a response indicating that the value received from the authenticator communication apparatus matches at least part of the identifier of the authenticatee communication apparatus,
when the communication apparatus is an authenticatee communication apparatus that is subject to authentication,
the communication apparatus comprising:
a receiving section that receives from the authenticator communication apparatus that performs authentication challenge data to authenticate the authenticatee communication apparatus together with the value to inquire whether the value matches at least part of the identifier of the authenticatee communication apparatus; and
a transmitting section that transmits to the authenticator communication apparatus response data for responding to the challenge data together with a response indicating that the value received from the authenticator communication apparatus matches at least part of the identifier of the authenticatee communication apparatus.

22. A communication method comprising:
transmitting challenge data to authenticate a second communication apparatus to the second communication apparatus by a first communication apparatus, in a time slot that is a segmented period of time in which a communication apparatus is able to use a single communication channel by time division, in a challenge data transmitting process;
transmitting response data for responding to the challenge data to the first communication apparatus by the second communication apparatus, in a time slot after the time slot in which the first communication apparatus transmits first challenge data to the second communication apparatus, in a response data transmitting process; and
authenticating the second communication apparatus by the first communication apparatus by using at least part of the challenge data transmitted to the second communication apparatus and at least part of the response data received from the second communication apparatus, in a time slot after the time slot in which the first communication apparatus transmits the first challenge data to the second communication apparatus, in an authenticating process.

23. The communication method of claim 22, wherein the first challenge data includes one of:
a set of a first encrypted random number obtained by encrypting a random number of the first communication apparatus, and a first encrypted identifier obtained by
encrypting an identifier of the first communication apparatus, by using the first
encrypted random number, and
a set of a first decrypted random number obtained by decrypting the random number of the first communication apparatus, and a first decrypted identifier obtained by decrypting the identifier of the first communication apparatus by using the first
decrypted random number, and
wherein first response data includes one of a set of a second decrypted random number obtained by further decrypting the random number of the first communication apparatus obtained by decrypting the first encrypted random number included in the first challenge data, and a decrypted identifier obtained by decrypting an identifier of the second communication apparatus by using the second decrypted random number, and
a set of a second encrypted random number obtained by further encrypting the random number of the first communication apparatus obtained by encrypting the first decrypted random number included in the first challenge data, and an encrypted identifier obtained by encrypting the identifier of the second communication apparatus by using the second encrypted random number.

24. A communication method comprising:
transmitting first challenge data to authenticate a second communication apparatus to the second communication apparatus by a first communication apparatus, in a time slot that is a segmented period of time in which a communication apparatus is able to use a single communication channel by time division, in a first challenge data transmitting process;
transmitting first response data for responding to the first challenge data to the first communication apparatus by the second communication apparatus, in a time slot after the time slot in which the first communication apparatus transmits the first challenge data to the second communication apparatus, in a first response data transmitting process;
authenticating the second communication apparatus by the first communication apparatus by using at least part of the first challenge data transmitted to the second communication apparatus and at least part of the first response data received from the second communication apparatus, in a time slot after the time slot in which the first communication apparatus transmits the first challenge data to the second communication apparatus, in a first authenticating process;
transmitting second challenge data to authenticate the first communication apparatus to the first communication apparatus by the second communication apparatus, in a time slot after the time slot in which the first communication apparatus transmits the first challenge data to the second communication apparatus, in a second challenge data transmitting process;
transmitting second response data for responding to the second challenge data to the second communication apparatus by the first communication apparatus, in a time slot after the time slot in which the first communication apparatus transmits the first challenge data to the second communication apparatus, in a second response data transmitting process;
authenticating the first communication apparatus by the second communication apparatus by using at least part of the second challenge data transmitted to the first communication apparatus and at least part of the second response data received from the first communication apparatus, in a time slot after the time slot in which the first communication apparatus transmits the first challenge data to the second communication apparatus, in a second authenticating process; and
transmitting third response data for responding to the second response data to the first communication apparatus by the second communication apparatus, in a time slot after the time slot in which the first communication apparatus transmits the first challenge data to the second communication apparatus, in a third response data transmitting process.

25. A communication method comprising:
transmitting first challenge data to authenticate a second communication apparatus to the second communication apparatus by a first communication apparatus, in a time slot that is a segmented period of time in which a communication apparatus is able to use a single communication channel by time division, in a first challenge data transmitting process;
transmitting second challenge data to authenticate the first communication apparatus and first response data for responding to the first challenge data to the first communication apparatus by the second communication apparatus, in a time slot after the time slot in which the first communication apparatus transmits the first challenge data to the second communication apparatus, in a first response data transmitting process;
authenticating the second communication apparatus by the first communication apparatus by using at least part of the first challenge data transmitted to the second communication apparatus and at least part of the first response data received from the second communication apparatus, in a time slot after the time slot in which the first communication apparatus transmits the first challenge data to the second communication apparatus, in a first authenticating process;
transmitting second response data for responding to the second challenge data to the second communication apparatus by the first communication apparatus, in a time slot after the time slot in which the first communication apparatus transmits the first challenge data to the second communication apparatus, in a second response data transmitting process;
authenticating the first communication apparatus by the second communication apparatus by using at least part of the second challenge data transmitted to the first communication apparatus and at least part of the second response data received from the first communication apparatus, in a time slot after the time slot in which the first communication apparatus transmits the first challenge data to the second communication apparatus, in a second authenticating process; and
transmitting third response data for responding to the second response data to the first communication apparatus by the second communication apparatus, in a time slot after the time slot in which the first communication apparatus transmits the first challenge data to the second communication apparatus, in a third response data transmitting process.

26. A communication method comprising:
transmitting first challenge data to authenticate the second communication apparatus to a second communication apparatus by a first communication apparatus, in a time slot that is a segmented period of time in which a communication apparatus is able to use a single communication channel by time division, in a first challenge data transmitting process;
transmitting first response data for responding to the first challenge data to the first communication apparatus by the second communication apparatus, in a time slot after the time slot in which the first communication apparatus transmits the first challenge data to the second communication apparatus, in a first response data transmitting process; and
authenticating the second communication apparatus by the first communication apparatus by using at least part of the first challenge data transmitted to the second communication apparatus and at least part of the first response data received from the second communication apparatus, in a time slot after the time slot in which the first communication apparatus transmits the first challenge data to the second communication apparatus, in a first authenticating process;
reporting to the second communication apparatus by the first communication apparatus that authenticity of the second communication apparatus is confirmed, in a time slot after the time slot in which the first communication apparatus transmits the first challenge data to the second communication apparatus, when authenticity of the second communication apparatus is confirmed in the first authenticating process, in a reporting process;
transmitting the second challenge data to authenticate the first communication apparatus to the first communication apparatus by the second communication apparatus, in a time slot after the time slot in which the first communication apparatus transmits the first challenge data to the second communication apparatus, in a second challenge data transmitting process;
transmitting the second response data for responding to the second challenge data to the second communication apparatus by the first communication apparatus, in a time slot after the time slot in which the first communication apparatus transmits the first challenge data to the second communication apparatus, in a second response data transmitting process;
authenticating the first communication apparatus by the second communication apparatus by using at least part of the second challenge data transmitted to the first communication apparatus and at least part of the second response data received from the first communication apparatus, in a time slot after the time slot in which the first communication apparatus transmits the first challenge data to the second communication apparatus, in a second authenticating process; and
transmitting the third response data for responding to the second response data to the first communication apparatus by the second communication apparatus, in a time slot after the time slot in which the first communication apparatus transmits the first challenge data to the second communication apparatus, in a third response data transmitting process.

27. A communication method comprising:
transmitting first challenge data to authenticate a second communication apparatus to the second communication apparatus by a first communication apparatus, in a time slot that is a segmented period of time in which a communication apparatus is able to use a single communication channel by time division, in a first challenge data transmitting process;
transmitting first response data for responding to the first challenge data and second challenge data to authenticate the first communication apparatus to the first communication apparatus by the second communication apparatus, in a time slot after the time slot in which the first communication apparatus transmits the first challenge data to the second communication apparatus, in a first response data transmitting process;
authenticating the second communication apparatus by the first communication apparatus by using at least part of the first challenge data transmitted to the second communication apparatus and at least part of the first response data received from the second communication apparatus, in a time slot after the time slot in which the first communication apparatus transmits the first challenge data to the second communication apparatus, in a first authenticating process;
reporting to the second communication apparatus by the first communication apparatus that authenticity of the second communication apparatus is confirmed, in a time slot after the time slot in which the first communication apparatus transmits the first challenge data to the second communication apparatus, when the authenticity of the second communication apparatus is confirmed in the first authenticating process, in a reporting process;
transmitting the second response data for responding to the second challenge data to the second communication apparatus by the first communication apparatus, in a time slot after the time slot in which the first communication apparatus transmits the first challenge data to the second communication apparatus, in a second response data transmitting process;
authenticating the first communication apparatus by the second communication apparatus by using at least part of the second challenge data transmitted to the first communication apparatus and at least part of the second response data received from the first communication apparatus, in a time slot after the time slot in which the first communication apparatus transmits the first challenge data to the second communication apparatus, in a second authenticating process; and
transmitting third response data for responding to the second response data to the first communication apparatus by the second communication apparatus, in a time slot after the time slot in which the first communication apparatus transmits the first challenge data to the second communication apparatus, in a third response data transmitting process.

28. The communication method of any one of claims 24 to 27,
wherein the first challenge data includes one of:
a set of a first encrypted random number obtained by encrypting a random number of the first communication apparatus, and a first encrypted identifier obtained by encrypting an identifier of the first communication apparatus by using the first
encrypted random number, and
a set of a first decrypted random number obtained by decrypting the random number of the first communication apparatus, and a first decrypted identifier obtained by decrypting the identifier of the first communication apparatus by using the first decrypted random number,
wherein the first response data includes one of:
a set of a second decrypted random number obtained by decrypting a random number of the second communication apparatus, and a third decrypted random number obtained by further decrypting the random number of the first communication apparatus obtained by decrypting the first encrypted random number included in the first challenge data by using the second decrypted random number, and
a set of a second encrypted random number obtained by encrypting the random number of the second communication apparatus, and a third encrypted random number obtained by further encrypting the random number of the first communication apparatus obtained by encrypting the first decrypted random number included in the first challenge data by using the second encrypted random number,
wherein the second response data includes one of:
a set of the random number of the second communication apparatus obtained by decrypting the second encrypted random number included in the first response data, and
a fourth decrypted random number obtained by further decrypting the random number of the second communication apparatus, and
a set of the random number of the second communication apparatus obtained by encrypting the second decrypted random number included in the first response data, and
a fourth encrypted random number obtained by further encrypting the random number of the second communication apparatus, and
wherein the third response data includes one of:
a second encrypted identifier obtained by encrypting the identifier of the second communication apparatus by using the first encrypted random number, and
a second decrypted identifier obtained by decrypting the identifier of the second communication apparatus by using the first decrypted random number.
